(19) Europäisches Patentamt
European Patent Office
Office européen des brevets

(11) **EP 2 254 075 A2**

(12) **EUROPÄISCHE PATENTANMELDUNG**

(43) Veröffentlichungstag:
**24.11.2010 Patentblatt 2010/47**

(51) Int Cl.:
**G06K 9/62** [(2006.01)]

(21) Anmeldenummer: **10004999.8**

(22) Anmeldetag: **12.05.2010**

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(30) Priorität: **18.05.2009 DE 102009021785**

(71) Anmelder: **EADS Deutschland GmbH**
**85521 Ottobrunn (DE)**

(72) Erfinder: **Hiebl, Manfred**
**92054 Sauerlach (DE)**

(54) **Verfahren zur Objekterkennung**

(57) Ein Verfahren zur Objekterkennung, wobei das Objekt (O1 02; 03) eine Mehrzahl von Ausprägungen (r', g', b', ...) abstrakter Objekteigenschaften (r, g, b, ...) aufweist und einer Objekt-Eigenschaftsklasse ($K_1$, $K_2$, $K_3$, ...) eines hierarchischen Systems von in einem ersten Speicher gespeicherten Objekt-Eigenschaftsklassen zugeordnet ist, weist die folgenden Schritte auf:
1.1 Betrachten zumindest eines Ortes, an dem das Objekt (O1 02; 03) vermutet wird, mittels einer Mehrzahl von eine Sensorgemeinschaft (R, G, B, ...) aufweisenden Sensoren die jeweils auf zumindest eine Objekteigenschaft (r, g, b, ...) ansprechen und daraufhin ein Sensorsignal ($S_R$, $S_G$, $S_B$, ...) abgeben;
1.2 Prüfen, ob die abgegebenen Sensorsignale ($S_R$, $S_G$, $S_B$, ...) jeweils einen für sie vorgegebenen Schwellenwert überschreiten und Akzeptieren jener Sensorsignale ($S_R$, $S_G$, $S_B$, ...), die den Schwellenwert überschreiten;
1.3 Paarweises Kombinieren der Sensoreigenschaften (R, G, B, ...) für die im Schritt 1.2 akzeptierte Sensorsignale ($S_R$, $S_G$, $S_B$, ...) erhalten worden sind, zu Identifikations-Eigenschaftspaaren (RG; RB; GB; ...);
1.4 Vergleichen der im Schritt 1.3 erhaltenen Gesamtheit der Identifikations-Eigenschaftspaare (RG; RB; GB; ...) mit den im ersten Speicher gespeicherten Objekt-Eigenschaftsklassen ($K_1$, $K_2$, $K_3$, ...);
1.5 Bestimmung des Objekts anhand der Objekt-Eigenschaftsklasse, deren Objekt-Eigenschaftspaare (rg; rb; gb; ...) identisch mit den in Schritt 1.3 erhaltenen Identifikations-Eigenschaftspaaren (RG; RB; GB; ...) sind.

**Fig. 13**

EP 2 254 075 A2

**Beschreibung**

TECHNISCHES GEBIET

Die vorliegende Erfindung betrifft ein Verfahren zur Objekterkennung, wobei das Objekt eine Mehrzahl von Objekteigenschaftens-Ausprägungen abstrakter Objekt-Eigenschaften aufweist und einer Objekt-Eigenschaftsklasse eines hierarchischen Systems von Objekt-Eigenschaftsklassen zugeordnet ist.

Jedes gegenständliche Objekt besitzt eine Vielzahl von Eigenschaften. Dies können beispielsweise Oberflächeneigenschaften, geometrische Eigenschaften, thermische Eigenschaften oder akustische Eigenschaften sein. Diese Objekteigenschaften können jeweils unterschiedliche Ausprägungen aufweisen, so kann beispielsweise die thermische Objekteigenschaft heiß oder kalt sein. Folglich kann ein Objekt in mehreren Objekteigenschafts-Ausprägungen, sogenannten Phänotypen, in Erscheinung treten, je nach dem mit welchen Beobachtungsmitteln das Objekt erfasst wird. Ein auf radioaktive Strahlung reagierendes Beobachtungsmittel wird über das Objekt eine andere Information liefern, als eine im sichtbaren Licht arbeitende Kamera oder eine Infrarotkamera.

Um ein Objekt zuverlässig, also mit 100 % Sicherheit zu identifizieren, ist es somit erforderlich, alle Eigenschaften des Objekts sowie deren jeweils mögliche Ausprägungen zu kennen und zu erfassen. Erst bei Übereinstimmung der erfassten Objekteigenschafts-Ausprägungen mit den für dieses Objekt in Frage kommenden Ausprägungen aller objektspezifischen Eigenschaften kann ein Objekt mit absoluter Fehlerfreiheit identifiziert werden. Es liegt auf der Hand, dass es unpraktikabel, wenn nicht sogar unmöglich ist, alle denkbaren Ausprägungen aller in Frage kommenden Objekteigenschaften vorab zu definieren, um diese dann später mit dem Ergebnis einer Beobachtung vergleichen zu können. So kann beispielsweise die Fernbedienung für ein Fernsehgerät jede beliebige geometrische Form annehmen; aufgrund der Ausprägung der Objekteigenschaft "geometrische Form" kann ein Objekt daher nicht als Fernbedienung identifiziert werden. Dies dürfte eher möglich sein durch die optische Erkennung irgendeiner Tastatur und die Erkennung der Abgabe einer infraroten oder elektromagnetischen Strahlung bei Betätigung der Tastatur. Mit der einfachen Logik der hundertprozentigen Erkennung aller Objekteigenschafts-Ausprägungen, also in diesem Beispiel auch der geometrischen Form, dürfte eine Fernbedienung für ein Fernsehgerät daher nur mit immensem Datenerfassungsaufwand möglich sein.

DARSTELLUNG DER ERFINDUNG

Es ist daher die Aufgabe der vorliegenden Erfindung, ein Verfahren zur Objekterkennung anzugeben, das eine zuverlässige Identifikation eines Objekts auch dann ermöglicht, wenn nicht alle Objekteigenschaften und deren Ausprägungen bekannt sind oder erfasst werden.

Diese Aufgabe wird durch das im Patentanspruch 1 angegebene Verfahren gelöst.

Erfindungsgemäß umfasst das Verfahren die folgenden Schritte:

   1.1 Betrachten zumindest eines Ortes, an dem das Objekt vermutet wird, mittels einer Mehrzahl von Sensoren die jeweils auf zumindest eine Objekteigenschaft ansprechen und daraufhin ein Sensorsignal abgeben;
   1.2 Prüfen, ob die abgegebenen Sensorsignale jeweils einen für sie vorgegebenen Schwellenwert überschreiten und Akzeptieren jener Sensorsignale, die den Schwellenwert überschreiten;
   1.3 Paarweises Kombinieren der Sensoreigenschaften für die im Schritt 1.2 akzeptierte Sensorsignale erhalten worden sind, zu Identifikations-Eigenschaftspaaren;
   1.4 Vergleichen der im Schritt 1.3 erhaltenen Gesamtheit der Identifikations-Eigenschaftspaare mit den im ersten Speicher gespeicherten Objekt-Eigenschaftsklassen;
   1.5 Bestimmung des Objekts anhand der Objekt-Eigenschaftsklasse, deren Objekt-Eigenschaftspaare identisch mit den in Schritt 1.3 erhaltenen Identifikations-Eigenschaftspaaren sind.

VORTEILE

Die erfindungsgemäße Bildung von Identifikations-Eigenschaftspaaren aus den bei der Betrachtung eines Objekts ermittelten Sensorsignalen und der Vergleich dieser Identifikations-Eigenschaftspaare mit objekttypischen Objekt-Eigenschaftsklassen führt dazu, dass ein Objekt mit hoher Wahrscheinlichkeit identifiziert werden kann, wenn ausreichend viele unterschiedliche vom Objekt verursachte Sensorsignale erfasst worden sind. Diese Wahrscheinlichkeit kann durch Vergrößern der Anzahl der das Objekt betrachtenden Sensoren und/oder durch Hinzufügen von Kontextwissen erhöht werden.

Vorzugsweise wird der Schritt 1.3 nach den Regeln der Mendelschen Vererbungslehre durchgeführt, wobei im Schritt 1.3 die Anzahl der Identifikations-Eigenschaftspaare einer jeden Sammlung einem Wert von $2^n$ mit $n \geq 1$ entspricht und wobei zum Erzielen dieser Bedingung zunächst Dubletten mehrfach ermittelter Identifikations-Eigenschaftspaare weggelassen werden und wobei dann, falls dadurch die Bedingung noch nicht erfüllt werden konnte, bereits vorhandene Identifikations-Eigenschaftspaare vervielfacht werden bis die Bedingung erfüllt ist.

Vorzugsweise erfolgt die Betrachtung des zumindest einen Ortes im Schritt 1.1 durch Scannen eines Bereichs, in welchem das Objekt vermutet wird. Durch diese Vorab-Schätzung wird der Prozess der Objekterkennung beschleunigt.

Vorzugsweise werden nach dem Schritt 1.2 die folgenden weiteren Schritte durchgeführt:

1.2.1 1 Erfassen von Ortskoordinaten zu jedem akzeptierten Sensorsignal,
1.2.2 Zuordnen der Ortskoordinaten zum akzeptierten Sensorsignal und
1.2.3 Speichern der akzeptierten Sensorsignale mit den zugeordneten Ortskoordinaten in einem zweiten Datenspeicher.

Diese bevorzugte Vorgehensweise erlaubt es, die Beobachtung des Objekts mit unterschiedlichen Sensoren zu unterschiedlichen Zeitpunkten durchzuführen und anschließend die erhaltenen Sensorsignale dem Objekt zuzuordnen, sofern das Objekt stationär ist.

Weiter vorzugsweise wird jedem akzeptierten Sensorsignal ein Zeitsignal zugeordnet, dass den Zeitpunkt der Erfassung des Sensorsignals wiedergibt, wobei die akzeptierten Sensorsignale mit dem jeweils zugeordneten Zeitsignal im zweiten Datenspeicher gespeichert werden. Aufgrund dieser Zeitsignalerfassung ist es auch möglich, bewegte Objekte zu identifizieren, selbst wenn die Beobachtung des Objekts mit unterschiedlichen Sensoren zu unterschiedlichen Zeitpunkten erfolgt. Insbesondere dann, wenn das Zeitsignal und die Ortskoordinaten des Objekts erfasst werden, kann eine zuverlässige Ortung sich bewegender Objekte durchgeführt werden.

In einer anderen bevorzugten Ausführungsform ist in der Mehrzahl von Sensoren zumindest ein Sensor vorgesehen, der zusätzlich zu einem bereits vorhandenen Sensor auf dieselbe Objekteigenschaft anspricht, wobei dieser zusätzliche Sensor ein Sensorsignal abgibt, das ebenfalls für die weitere Bearbeitung nur akzeptiert wird, wenn es einen vorgegebenen Schwellenwert überschreitet. Auf diese Weise kann dieser Objekteigenschaft eine höhere Bedeutung und eine höhere Wertigkeit bei der Objekt-Identifikation zugewiesen werden.

Vorzugsweise erfolgt die Betrachtung des zumindest einen Ortes im Schritt 1.1 durch unterschiedliche Sensoren von zumindest einem Teil der Sensoren zu unterschiedlichen Zeitpunkten und die Schritte 1.3 und 1.4 werden durchgeführt, wenn die Betrachtung des Ortes durch alle Sensoren erfolgt ist. Es werden somit erst alle Aufklärungsergebnisse gesammelt, um anschließend aus diesen Aufklärungsergebnissen die Identifikations-Eigenschaftspaare zu bilden, deren Gesamtheit dann mit den gespeicherten Objekt-Eigenschaftsklassen verglichen wird.

Weiter vorzugsweise wird die Betrachtung des Ortes im Schritt 1.1 durch unterschiedliche Sensoren von zumindest einem Teil der Sensoren mehrmals nacheinander durchgeführt, wobei der Schritt 1.3 für die Gesamtheit der durchgeführten Betrachtungen durchlaufen wird und wobei die aus der Gesamtheit der durchgeführten Betrachtungen ermittelten Identifikations-Eigenschaftspaare gemäß den Regeln der Mendelschen Vererbungslehre zu einer Sammlung von Identifikationseigenschaftspaaren zusammengefasst werden, wobei die Anzahl der Identifikations-Eigenschaftspaare einer jeden Sammlung einem Wert von $2^n$ mit $n \mu 1$ entspricht und wobei zum Erzielen dieser Bedingung zunächst beim Zusammenfassen der ermittelten Identifikations-Eigenschaftspaare mehrfach ermittelte Identifikations-Eigenschaftspaare nur einmal in die Sammlung übernommen werden und wobei dann, falls dadurch die Bedingung noch nicht erfüllt werden konnte, bereits vorhandene Identifikations-Eigenschaftspaare vervielfacht werden bis diese Bedingung erfüllt ist, worauf dann die in der Sammlung zusammengefassten Identifkations-Eigenschaftspaare mit den gespeicherten Objekt-Eigenschaftspaaren verglichen werden. Diese Mehrfachbetrachtung des Objekts durch zumindest einen Sensor erhöht ebenfalls die Zuverlässigkeit der Identifikations-Eigenschaftspaare zu einer Objekt-Eigenschaftsklasse und erhöht somit die Identifikations-Wahrscheinlichkeit.

Vorzugsweise werden beim Kombinieren der Sensoreigenschaften im Schritt 1.3 Dubletten mehrfach vorhandener Identifikations-Eigenschaftspaare nicht berücksichtigt, wobei die Reihenfolge der Identifikations-Eigenschaften in einem Identifikations-Eigenschaftspaar unberücksichtigt bleibt. Das bedeutet zum Beispiel, dass bei einer Kombination der Eigenschaften R und G die daraus resultierenden Eigenschaftspaare "RG" und "GR" gleichgesetzt werden und nur eines dieser beiden Eigenschaftspaare in die Gesamtheit der Identifikations-Eigenschaftspaare aufgenommen wird.

Vorzugsweise werden auch die hierarchischen Objekt-Eigenschaftsklassen durch Klassifizierung der aus den Objekt-Eigenschaften gebildeten Objekt-Eigenschaftspaare gebildet.

Auch hier gilt bevorzugt die Bedingung, dass die Anzahl der Objekt-Eigenschaftspaare einer Objekt-Eigenschaftsklasse einem Wert von $2^n$ mit $n \mu 1$ entspricht, wobei zum Erzielen dieser Bedingung zunächst bei der Klassifizierung der Objekt-Eigenschaftspaare Dubletten mehrfach vorhandener Objekt-Eigenschaftspaare nicht berücksichtigt werden, wobei die Reihenfolge der Objekt-Eigenschaften in einem Objekt-Eigenschaftspaar unberücksichtigt bleibt, wobei dann, falls dadurch die Bedingung noch nicht erfüllt werden konnte, bereits vorhandene Objekt-Eigenschaftspaare vervielfacht werden bis die Bedingung erfüllt ist. Es wird dabei zum Beispiel das Eigenschaftspaar ,,rg" dem Eigenschaftspaar ,,gr" gleichgesetzt und nur eines von beiden wird in die entsprechende Objekt-Eigenschaftsklasse aufgenommen.

Die Klassifizierung der Objekteigenschaften erfolgt demzufolge durch Vererbung von Eigenschaften nach den Regeln der Mendelschen Vererbungslehre. Dabei wird aus den Objekt-Eigenschaftspaaren der Hardy-Weinberg-Typ ermittelt, der die Vererbungsklasse und damit die Objekt-Eigenschaftsklasse bestimmt. Die gleiche Vorgehensweise wird bevorzugterweise bei der Bildung der Gesamtheit der Identifikations-Eigenschaftspaare im Schritt 1.3 durchgeführt.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

KURZE BESCHREIBUNG DER ZEICHNUNGEN

Es zeigt:

Fig. 1 ein Vererbungsschema für zwei Merkmale s und w;
Fig. 2 das polymorphe Vererbungsschema für vier Merkmale r, g, b und y;
Fig. 3 die möglichen Elternkombinationen bei zwei Merkmalen;
Fig. 4 die Phänotypen- und Allelverhältnisse bei zwei Merkmalen;
Fig. 5 die Phänotypenklassen innerhalb der Mendel-Klassifikation bei drei Merkmalen;
Fig. 6 mehrdimensionale Polymorphismen;
Fig. 7 die Phänotypenevolution und -divergenz;
Fig. 8 den Entropieverlust durch Phänotypenselektion;
Fig. 9 die Vererbung des statistischen Gleichgewichts;
Fig. 10 die Wahrheitstabelle für UND- und ODER-Verknüpfung und Implikation;
Fig. 11 die dreidimensionale Pentalogik;
Fig. 12 die Hardy-Weinberg-Zahlen bis einschließlich der vierten Ordnung;
Fig. 13 eine erste Objekterfassung in einem Ausführungsbeispiel der Erfindung;
Fig. 14 eine Darstellung gesammelter Identifikations-Eigenschaftspaare nach der ersten Objekterfassung;
Fig. 15 eine zweite Objekterfassung im Ausführungsbeispiel der Erfindung;
Fig. 16 ein Ergebnis der erfindungsgemäßen Datenfusion aus der ersten und zweiten Objekterfassung;
Fig. 17 Übersicht über unterschiedliche Klassifikationsmöglichkeiten.

DARSTELLUNG VON BEVORZUGTEN AUSFÜHRUNGSBEISPIELEN

Das erfindungsgemäße Verfahren basiert nicht auf der herkömmlichen Quantorenlogik und auch nicht auf neuronalen Netzen, sondern auf dem Prinzip der Vererbung von Eigenschaften. Bei der Vererbung in der Natur wird nicht bloß nach den Kategorien "gut" und "schlecht" entschieden, sondern die Natur geht auch Kompromisse ein. Basierend auf den Mendelschen Regeln der Vererbungslehre ist das erfindungsgemäße Verfahren in der Lage, von "Generation" zu "Generation" treffsicherer zu entscheiden.

In der Natur ist jedes Gen das Produkt fusionierter DNA-Information beider Elternteile. Einander entsprechende, jedoch nicht immer gleiche Gene bestimmen die Unterschiede hinsichtlich der Merkmale eines Organismus', den sogenannten Phänotyp. Ähnlich wie bei der Vererbung in der Natur können beliebige Objektmerkmale unterschiedlicher Ausprägung phänotypisiert werden, wobei es gleichgültig ist, woher die Informationen stammen. Als Beispiel wird ein fahrendes Panzerfahrzeug betrachtet. Die Radarreflektoreigenschaft und die abgegebene Wärme des Fahrzeugs sind unterschiedlicher Ausprägungen ein und desselben Objekts, nämlich des fahrenden Panzerfahrzeugs. Die Panzerung wird immer metallisch bleiben, so dass sich die Radarreflektoreigenschaft dominant vererbt. Ein Panzerfahrzeug bleibt jedoch immer ein Panzerfahrzeug, auch wenn es nicht in Bewegung ist und damit nicht aufgeheizt ist, weil die Brennkraftmaschine nicht läuft. Die Infrarotabstrahlung ist daher eine sich rezessiv vererbende Eigenschaft des Panzerfahrzeugs. Ein Panzerfahrzeug mit diesen Eigenschaften besitzt also zwei Phänotypen. Das ruhende und das bewegte Panzerfahrzeug.

Beim erfindungsgemäßen Verfahren zur Objekterkennung werden außer den einzelnen, von den Sensoren durchgeführten Betrachtungen die Identifikations-Eigenschaftspaare gebildet und die Gesamtheit der Identifikations-Eigenschaftspaare wird mit gespeicherten Objekt-Eigenschaftsklassen verglichen. Bei dieser Vorgehensweise werden bevorzugt die Regeln der Mendelschen Vererbungslehre angewendet. Zum besseren Verständnis der vorliegenden Erfindung werden daher nachstehend zunächst die Grundlagen der Mendelschen Vererbungslehre dargestellt.

**Erläuterung des Vererbungsprinzips**

Jedes Gen ist das Produkt fusionierter DNA-Informationen beider Elternteile. Einander entsprechende, jedoch nicht immer gleiche Gene bestimmen die Unterschiede hinsichtlich der Merkmale eines Organismus, den Phänotyp. Ähnlich wie in der Vererbung können beliebige Objektmerkmale unterschiedlicher Ausprägung phänotypisiert werden, wobei es gleichgültig ist, woher die Informationen stammen.

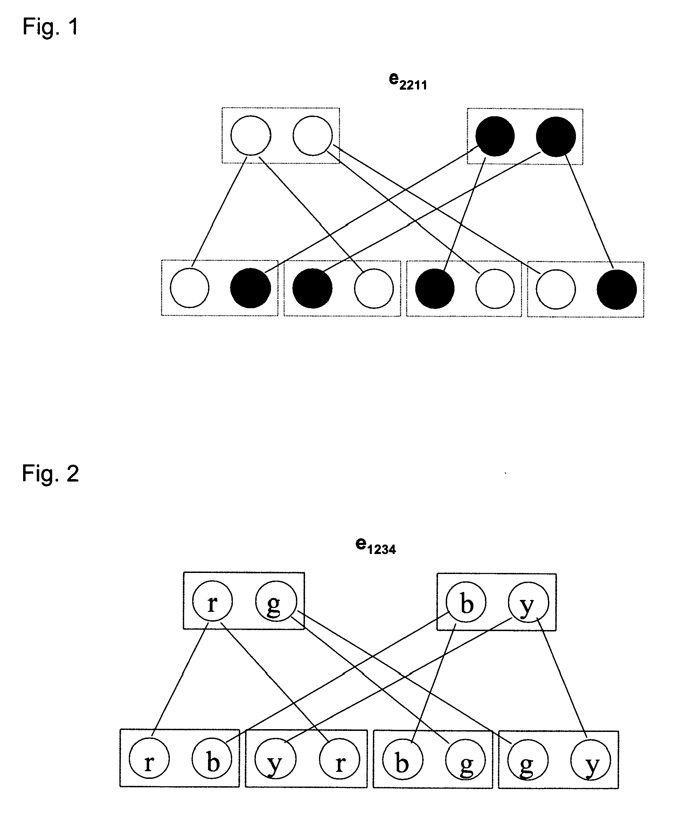

Figur 1 zeigt ein Vererbungsschema für zwei Merkmale s (schwarz) und w (weiß). Jedes Merkmal kann unabhängig davon, in wie vielen Ausprägungen es vorliegt, zweimal vererbt werden, so dass sich insgesamt vier verschiedene Möglichkeiten ergeben. Gleichartige Merkmale nennt man homozygot, gemischte heterozygot.

Figur 2 zeigt das polymorphe Vererbungsschema für vier Merkmale r, g, b und y Die Buchstaben r, g, b, y stehen hier stellvertretend für die vier Farben rot (r), grün (g), blau (b) und gelb (y).

**Ein statistisches Modell der Vererbung**

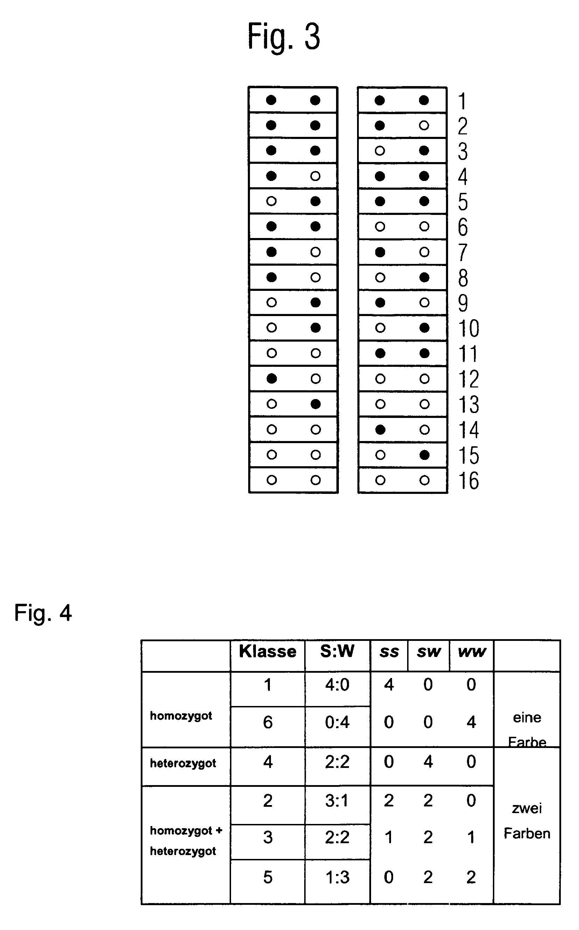

Sei $E = \{e_{1111}, ... e_{ijkl}, ... e_{mmmm}\}$ ein Ereignis mit m Merkmalen, das heißt $m^4$ Elementen in der Elterngeneration F0. Für jede Merkmalskombination *ijkl* gelte: $1 \leq i,j,k,l, \leq m$. Für das Allelverhältnis $(i_1)$: $(i_2)$:$\cdots$:$(i_m)$, wobei $i_1, i_2, ..., i_m \in \{0,1,2,3,4\}$ natürliche Zahlen seien, gelte die Nebenbedingung: $i_1 + i_2 + ... + i_m = 4$ (Mendelbedingung). In Fig. 3 ist die Zahl der möglichen Elementarereignisse bei zwei Merkmalen (schwarz und weiß) dargestellt. Figur 3 zeigt somit die möglichen Elternkombinationen bei zwei Merkmalen.

Die zulässigen fünf Allelverhältnisse dazu sind 4:0, 3:1, 2:2, 1:3 und 0:4. Daraus ergeben sich in der Kind-Generation (F1) sechzehn verschiedene Mendel-Typen, im Folgenden kurz mit dem Symbol T bezeichnet.

Bei drei Merkmalen ergeben sich insgesamt 81 mögliche Elternpaare, die sich in 21 Mendel-Klassen untergliedern und nach 15 verschiedenen Allelverhältnissen einstufen lassen.

**Lösung der Mendelschen Gleichungen**

In jedem Vererbungsschritt addieren sich jeweils sechs Mendel-Typen der *n*-ten Generation zu einem Mendel-Typ der (n+1)ten Generation, zum Beispiel gilt für Mendel-Typ 4 in der zweiten Generation: $T_4^{(2)} = T_1^{(1)} + 2T_2^{(1)} + 2T_3^{(1)} + T_8^{(1)}$.

Besteht der Polymorphismus aus nur zwei Merkmalen, so erhalten wir die folgenden 16 Vererbungsgleichungen:

$$T_1^{(n+1)} = 6T_1^{(n)};$$

$$T_9^{(n+1)} = T_2^{(n)} + T_5^{(n)} + T_9^{(n)} + T_{11}^{(n)} + T_{13}^{(n)} + T_{14}^{(n)};$$

$$T_2^{(n+1)} = T_1^{(n)} + 2T_2^{(n)} + T_3^{(n)} + T_5^{(n)} + T_9^{(n)};$$

$$T_{10}^{(n+1)} = T_4^{(n)} + T_5^{(n)} + T_8^{(n)} + T_{11}^{(n)} + T_{14}^{(n)} + T_{15}^{(n)};$$

$$T_3^{(n+1)} = T_1^{(n)} + T_3^{(n)} + 2T_4^{(n)} + T_5^{(n)} + T_8^{(n)};$$

$$T_{11}^{(n+1)} = T_7^{(n)} + 2T_8^{(n)} + 2T_9^{(n)} + T_{10}^{(n)};$$

$$T_4^{(n+1)} = T_1^{(n)} + 2T_2^{(n)} + 2T_3^{(n)} + T_8^{(n)};$$

$$T_{12}^{(n+1)} = T_8^{(n)} + 2T_{12}^{(n)} + 2T_{13}^{(n)} + T_{16}^{(n)};$$

$$T_5^{(n+1)} = T_1^{(n)} + 2T_4^{(n)} + 2T_5^{(n)} + T_9^{(n)};$$

$$T_{13}^{(n+1)} = T_9^{(n)} + 2T_{14}^{(n)} + 2T_{15}^{(n)} + T_{16}^{(n)};$$

$$T_6^{(n+1)} = T_7^{(n)} + 2T_8^{(n)} + 2T_9^{(n)} + T_{10}^{(n)};$$

$$T_{14}^{(n+1)} = T_9^{(n)} + T_{12}^{(n)} + T_{14}^{(n)} + 2T_{15}^{(n)} + T_{16}^{(n)};$$

$$T_7^{(n+1)} = T_2^{(n)} + T_3^{(n)} + T_6^{(n)} + T_9^{(n)} + T_{12}^{(n)} + T_{13}^{(n)};$$

$$T_{15}^{(n+1)} = T_8^{(n)} + T_{12}^{(n)} + T_{14}^{(n)} + 2T_{15}^{(n)} + T_{16}^{(n)};$$

$$T_8^{(n+1)} = T_3^{(n)} + T_4^{(n)} + T_6^{(n)} + T_8^{(n)} + T_{12}^{(n)} + T_{15}^{(n)};$$

$$T_{16}^{(n+1)} = 6T_{16}^{(n)}.$$

Übersichtlicher lassen sich diese Rekursionsgleichungen in Matrixschreibweise darstellen:

$$(1) \quad
\begin{pmatrix} T_1^{(n+1)} \\ T_2^{(n+1)} \\ T_3^{(n+1)} \\ T_4^{(n+1)} \\ T_5^{(n+1)} \\ T_6^{(n+1)} \\ T_7^{(n+1)} \\ T_8^{(n+1)} \\ T_9^{(n+1)} \\ T_{10}^{(n+1)} \\ T_{11}^{(n+1)} \\ T_{12}^{(n+1)} \\ T_{13}^{(n+1)} \\ T_{14}^{(n+1)} \\ T_{15}^{(n+1)} \\ T_{16}^{(n+1)} \end{pmatrix}
=
\begin{pmatrix}
6 & 0 & 0 & 0 & 0 & 0 & 0 & 0 & 0 & 0 & 0 & 0 & 0 & 0 & 0 & 0 \\
1 & 2 & 1 & 0 & 1 & 0 & 0 & 0 & 1 & 0 & 0 & 0 & 0 & 0 & 0 & 0 \\
1 & 0 & 1 & 2 & 1 & 0 & 0 & 1 & 0 & 0 & 0 & 0 & 0 & 0 & 0 & 0 \\
1 & 2 & 2 & 0 & 0 & 0 & 0 & 1 & 0 & 0 & 0 & 0 & 0 & 0 & 0 & 0 \\
1 & 0 & 0 & 2 & 2 & 0 & 0 & 0 & 1 & 0 & 0 & 0 & 0 & 0 & 0 & 0 \\
0 & 0 & 0 & 0 & 0 & 0 & 1 & 2 & 2 & 1 & 0 & 0 & 0 & 0 & 0 & 0 \\
0 & 1 & 1 & 0 & 0 & 1 & 0 & 0 & 1 & 0 & 0 & 1 & 1 & 0 & 0 & 0 \\
0 & 0 & 1 & 1 & 0 & 1 & 0 & 1 & 0 & 0 & 0 & 1 & 0 & 0 & 1 & 0 \\
0 & 1 & 0 & 0 & 1 & 0 & 0 & 0 & 1 & 0 & 1 & 0 & 1 & 1 & 0 & 0 \\
0 & 0 & 0 & 1 & 1 & 0 & 0 & 1 & 0 & 0 & 1 & 0 & 0 & 1 & 1 & 0 \\
0 & 0 & 0 & 0 & 0 & 0 & 1 & 2 & 2 & 1 & 0 & 0 & 0 & 0 & 0 & 0 \\
0 & 0 & 0 & 0 & 0 & 0 & 0 & 1 & 0 & 0 & 0 & 2 & 2 & 0 & 0 & 1 \\
0 & 0 & 0 & 0 & 0 & 0 & 0 & 0 & 1 & 0 & 0 & 0 & 0 & 2 & 2 & 1 \\
0 & 0 & 0 & 0 & 0 & 0 & 0 & 0 & 1 & 0 & 0 & 1 & 2 & 1 & 0 & 1 \\
0 & 0 & 0 & 0 & 0 & 0 & 0 & 1 & 0 & 0 & 0 & 1 & 0 & 1 & 2 & 1 \\
0 & 0 & 0 & 0 & 0 & 0 & 0 & 0 & 0 & 0 & 0 & 0 & 0 & 0 & 0 & 6
\end{pmatrix}
\begin{pmatrix} T_1^{(n)} \\ T_2^{(n)} \\ T_3^{(n)} \\ T_4^{(n)} \\ T_5^{(n)} \\ T_6^{(n)} \\ T_7^{(n)} \\ T_8^{(n)} \\ T_9^{(n)} \\ T_{10}^{(n)} \\ T_{11}^{(n)} \\ T_{12}^{(n)} \\ T_{13}^{(n)} \\ T_{14}^{(n)} \\ T_{15}^{(n)} \\ T_{16}^{(n)} \end{pmatrix}$$

In abgekürzter Vektornotation können wir schreiben:

$$(2) \qquad \mathbf{T}^{(n+1)} = \mathbf{V}\mathbf{T}^{(n)},$$

wobei $\mathbf{T}^{(n)} = (T_1^{(n)},...,T_{16}^{(n)})^{\mathsf{T}}$ den Mendel-Operator der $n$-ten Generation ($n{\geq}1$) angibt und V die Vererbungsmatrix.
In Tensornotation lassen sich die Koeffizienten des Mendel-Operators der ersten (Kind-) Generation wie folgt darstellen:

$$(3) \qquad T_k^{(1)} = \sum_{i=1}^{m} \sum_{j=1}^{m} T_{ijk} \left\langle s_i \middle| s_j \right\rangle \quad k \in \left\{ 1, \ \ldots, \ m^4 \right\}$$

wobei m die Zahl der Merkmale $s_i$ ist und die $T_{ijk}$ konstante Koeffizienten der Merkmalskombinationen $s_i s_j$ darstellen. Wählen wir $m = 2$ und definieren die Allele durch orthogonale Vektoren $s_1 \equiv s$ und $s_2 \equiv w$, so erhalten wir folgenden sechsfach entarteten Satz von Anfangsbedingungen:

$$T_1^{(1)} = 4ss \qquad\qquad T_9^{(1)} = sw + ws + ww$$
$$T_2^{(1)} = 2ss + sw + ws \qquad T_{10}^{(1)} = sw + ws + ww$$
$$T_3^{(1)} = 2ss + sw + ws \qquad T_{11}^{(1)} = 2sw + 2ws$$
$$T_4^{(1)} = 2ss + sw + ws \qquad T_{12}^{(1)} = sw + ws + 2ww$$
$$T_5^{(1)} = 2ss + sw + ws \qquad T_{13}^{(1)} = sw + ws + 2ww$$
$$T_6^{(1)} = 2sw + 2ws \qquad\quad T_{14}^{(1)} = sw + ws + 2ww$$
$$T_7^{(1)} = sw + ws + ww \qquad T_{15}^{(1)} = sw + ws + 2ww$$
$$T_8^{(1)} = sw + ws + ww \qquad T_{16}^{(1)} = 4ww$$

(4)

wobei wir $ss \equiv \langle s|s \rangle$, $sw \equiv \langle s|w \rangle$, $ws \equiv \langle w|s \rangle$ und $ww \equiv \langle w|w \rangle$ gesetzt und die Linearkombination

(5)
$$T_k^{(n)} |s_i\rangle = \sum_{j=1}^{m} T_{ijk} |s_j\rangle$$

mit der Normierungsbedingung $\sum_{i=1}^{m} \langle s_i | s_i \rangle = 1$ verwendet haben.

Die Summe aller Linearkombinationen einer Generation gehorcht folgender Gesetzmäßigkeit:

(6)
$$T_k^{(n)} = \sum_{i=1}^{m} \langle s_i | T_k^{(n)} s_i \rangle = 4 \cdot 6^{n-1} \quad \forall k \in \left\{ 1, \ \ldots \ , m^4 \right\} \quad m \in \mathbf{N}$$

das heißt in der $n$-ten Generation ist die Zahl der Genotypen ein Vierfaches der ($n$-1)ten Potenz von 6.

In dem vorliegenden Bimorphismus lässt sich der 16-dimensionale Mendel-Operator $n$-ter Generation in jeweils vier Basisvektoren zerlegen:

(7)
$$\mathbf{T}^{(n)} = \mathbf{T}_{ss}^{(n)} + \mathbf{T}_{sw}^{(n)} + \mathbf{T}_{ws}^{(n)} + \mathbf{T}_{ww}^{(n)}$$

Für die erste Generation lautet die Zerlegung:

(8)
$$\mathbf{T}_{ss}^{(1)} = \left(4, \ 2, \ 2, \ 2, \ 2, \ 0, \ 1, \ 1, \ 1, \ 1, \ 0, \ 0, \ 0, \ 0, \ 0, \ 0 \right)^{T}$$
$$\mathbf{T}_{sw}^{(1)} = \left(0, \ 1, \ 1, \ 1, \ 1, \ 2, \ 1, \ 1, \ 1, \ 1, \ 2, \ 1, \ 1, \ 1, \ 1, \ 0 \right)^{T}$$
$$\mathbf{T}_{ws}^{(1)} = \left(0, \ 1, \ 1, \ 1, \ 1, \ 2, \ 1, \ 1, \ 1, \ 1, \ 2, \ 1, \ 1, \ 1, \ 1, \ 0 \right)^{T}$$
$$\mathbf{T}_{ww}^{(1)} = \left(0, \ 0, \ 0, \ 0, \ 0, \ 0, \ 1, \ 1, \ 1, \ 1, \ 0, \ 2, \ 2, \ 2, \ 2, \ 4 \right)^{T}$$

Setzt man diese Basisvektoren in obige Rekursionsgleichung ein, so erhält man die Basisvektoren der zweiten Generation:

$$\begin{pmatrix} T_1^{(2)} \\ T_2^{(2)} \\ T_3^{(2)} \\ T_4^{(2)} \\ T_5^{(2)} \\ T_6^{(2)} \\ T_7^{(2)} \\ T_8^{(2)} \\ T_9^{(2)} \\ T_{10}^{(2)} \\ T_{11}^{(2)} \\ T_{12}^{(2)} \\ T_{13}^{(2)} \\ T_{14}^{(2)} \\ T_{15}^{(2)} \\ T_{16}^{(2)} \end{pmatrix} = \begin{pmatrix} 6&0&0&0&0&0&0&0&0&0&0&0&0&0&0&0 \\ 1&2&1&0&1&0&0&0&1&0&0&0&0&0&0&0 \\ 1&0&1&2&1&0&0&1&0&0&0&0&0&0&0&0 \\ 1&2&2&0&0&0&0&1&0&0&0&0&0&0&0&0 \\ 1&0&0&2&2&0&0&0&1&0&0&0&0&0&0&0 \\ 0&0&0&0&0&0&1&2&2&1&0&0&0&0&0&0 \\ 0&1&1&0&0&1&0&0&1&0&0&1&1&0&0&0 \\ 0&0&1&1&0&1&0&1&0&0&0&1&0&0&1&0 \\ 0&1&0&0&1&0&0&0&1&0&1&0&1&1&0&0 \\ 0&0&0&1&1&0&0&1&0&0&1&0&0&1&1&0 \\ 0&0&0&0&0&0&1&2&2&1&0&0&0&0&0&0 \\ 0&0&0&0&0&0&0&1&0&0&0&2&2&0&0&1 \\ 0&0&0&0&0&0&0&0&1&0&0&0&0&2&2&1 \\ 0&0&0&0&0&0&0&0&1&0&0&1&2&1&0&1 \\ 0&0&0&0&0&0&0&1&0&0&0&1&0&1&2&1 \\ 0&0&0&0&0&0&0&0&0&0&0&0&0&0&0&6 \end{pmatrix} \begin{pmatrix} 4 \\ 2 \\ 2 \\ 2 \\ 2 \\ 0 \\ 1 \\ 1 \\ 1 \\ 1 \\ 0 \\ 0 \\ 0 \\ 0 \\ 0 \\ 0 \end{pmatrix} + \ldots = \begin{pmatrix} 24 \\ 13 \\ 13 \\ 13 \\ 13 \\ 6 \\ 5 \\ 5 \\ 5 \\ 5 \\ 6 \\ 1 \\ 1 \\ 1 \\ 1 \\ 0 \end{pmatrix} + 2\begin{pmatrix} 0 \\ 5 \\ 5 \\ 5 \\ 5 \\ 6 \\ 7 \\ 7 \\ 7 \\ 7 \\ 6 \\ 5 \\ 5 \\ 5 \\ 5 \\ 0 \end{pmatrix} + \begin{pmatrix} 0 \\ 1 \\ 1 \\ 1 \\ 1 \\ 6 \\ 5 \\ 5 \\ 5 \\ 5 \\ 6 \\ 13 \\ 13 \\ 13 \\ 13 \\ 24 \end{pmatrix}$$

Die Zerlegung in Basisvektoren für die zweite Generation lautet also:

$$
\begin{aligned}
\mathbf{T}_{ss}^{(2)} &= \begin{pmatrix} 24, & 13, & 13, & 13, & 13, & 6, & 5, & 5, & 5, & 5, & 6, & 1, & 1, & 1, & 1, & 0 \end{pmatrix}^T \\
\mathbf{T}_{sw}^{(2)} &= \begin{pmatrix} 0, & 5, & 5, & 5, & 5, & 6, & 7, & 7, & 7, & 7, & 6, & 5, & 5, & 5, & 5, & 0 \end{pmatrix}^T \\
\mathbf{T}_{ws}^{(2)} &= \begin{pmatrix} 0, & 5, & 5, & 5, & 5, & 6, & 7, & 7, & 7, & 7, & 6, & 5, & 5, & 5, & 5, & 0 \end{pmatrix}^T \\
\mathbf{T}_{ww}^{(2)} &= \begin{pmatrix} 0, & 1, & 1, & 1, & 1, & 6, & 5, & 5, & 5, & 5, & 6, & 13, & 13, & 13, & 13, & 24 \end{pmatrix}^T
\end{aligned}
\tag{9}
$$

In derselben Weise fährt man nun fort, so dass sich die Basisvektoren der dritten Generation durch Einsetzen der Basisvektoren der zweiten Generation in die Rekursionsgleichung ergeben:

$$
\begin{pmatrix} T_1^{(3)} \\ T_2^{(3)} \\ T_3^{(3)} \\ T_4^{(3)} \\ T_5^{(3)} \\ T_6^{(3)} \\ T_7^{(3)} \\ T_8^{(3)} \\ T_9^{(3)} \\ T_{10}^{(3)} \\ T_{11}^{(3)} \\ T_{12}^{(3)} \\ T_{13}^{(3)} \\ T_{14}^{(3)} \\ T_{15}^{(3)} \\ T_{16}^{(3)} \end{pmatrix}
=
\begin{pmatrix}
6&0&0&0&0&0&0&0&0&0&0&0&0&0&0&0\\
1&2&1&0&1&0&0&0&1&0&0&0&0&0&0&0\\
1&0&1&2&1&0&0&1&0&0&0&0&0&0&0&0\\
1&2&2&0&0&0&0&1&0&0&0&0&0&0&0&0\\
1&0&0&2&2&0&0&0&1&0&0&0&0&0&0&0\\
0&0&0&0&0&0&1&2&2&1&0&0&0&0&0&0\\
0&1&1&0&0&1&0&0&1&0&0&1&1&0&0&0\\
0&0&1&1&0&1&0&1&0&0&0&1&0&0&1&0\\
0&1&0&0&1&0&0&0&1&0&1&0&1&1&0&0\\
0&0&0&1&1&0&0&1&0&0&1&0&0&1&1&0\\
0&0&0&0&0&0&1&2&2&1&0&0&0&0&0&0\\
0&0&0&0&0&0&0&1&0&0&0&2&2&0&0&1\\
0&0&0&0&0&0&0&0&1&0&0&0&0&2&2&1\\
0&0&0&0&0&0&0&0&1&0&0&1&2&1&0&1\\
0&0&0&0&0&0&0&1&0&0&0&1&0&1&2&1\\
0&0&0&0&0&0&0&0&0&0&0&0&0&0&0&6
\end{pmatrix}
\begin{pmatrix} 24 \\ 13 \\ 13 \\ 13 \\ 13 \\ 6 \\ 5 \\ 5 \\ 5 \\ 5 \\ 6 \\ 1 \\ 1 \\ 1 \\ 1 \\ 0 \end{pmatrix}
+\ldots=
\begin{pmatrix} 144 \\ 81 \\ 81 \\ 81 \\ 81 \\ 30 \\ 39 \\ 39 \\ 39 \\ 39 \\ 30 \\ 9 \\ 9 \\ 9 \\ 9 \\ 0 \end{pmatrix}
+2\begin{pmatrix} 0 \\ 27 \\ 27 \\ 27 \\ 27 \\ 42 \\ 33 \\ 33 \\ 33 \\ 33 \\ 42 \\ 27 \\ 27 \\ 27 \\ 27 \\ 0 \end{pmatrix}
+\begin{pmatrix} 0 \\ 9 \\ 9 \\ 9 \\ 9 \\ 30 \\ 39 \\ 39 \\ 39 \\ 39 \\ 30 \\ 81 \\ 81 \\ 81 \\ 81 \\ 144 \end{pmatrix}
$$

wobei

$$
\begin{aligned}
\mathbf{T}_{ss}^{(3)} &= \left(144,\ 81,\ 81,\ 81,\ 81,\ 30,\ 39,\ 39,\ 39,\ 39,\ 30,\ 9,\ 9,\ 9,\ 9,\ 0\right)^T \\
\mathbf{T}_{sw}^{(3)} &= \left(0,\ 27,\ 27,\ 27,\ 27,\ 42,\ 33,\ 33,\ 33,\ 33,\ 42,\ 27,\ 27,\ 27,\ 27,\ \dots\right. \\
\mathbf{T}_{ws}^{(3)} &= \left(0,\ 27,\ 27,\ 27,\ 27,\ 42,\ 33,\ 33,\ 33,\ 33,\ 42,\ 27,\ 27,\ 27,\ 27,\ \dots\right. \\
\mathbf{T}_{ww}^{(3)} &= \left(0,\ 9,\ 9,\ 9,\ 9,\ 30,\ 39,\ 39,\ 39,\ 39,\ 30,\ 81,\ 81,\ 81,\ 81,\ 144\right)^T
\end{aligned}
\qquad (10)
$$

## Entartung der Lösungen eines Polymorphismus

Anhand eines Koeffizientenvergleichs kann man erkennen, dass folgende Mendel-Typen identisch sind:

$$
\begin{aligned}
T_1^{(1)} &= 4ss \\
T_2^{(1)} = T_3^{(1)} = T_4^{(1)} = T_5^{(1)} &= 2ss + sw + ws \\
T_6^{(1)} = T_{11}^{(1)} &= 2sw + 2ws \\
T_7^{(1)} = T_8^{(1)} = T_9^{(1)} = T_{10}^{(1)} &= ss + sw + ws + ww \\
T_{12}^{(1)} = T_{13}^{(1)} = T_{14}^{(1)} = T_{15}^{(1)} &= sw + ws + 2ww \\
T_{16}^{(1)} &= 4ww
\end{aligned}
\qquad (11)
$$

Die Entartung der Lösungen ermöglicht eine Einteilung der 16 Mendel-Typen in sechs verschiedene Phänotypenklassen. Abhängig vom Grad des Polymorphismus steigt die Zahl der möglichen Klassen mit der Zahl der Objektmerkmale.

### Die Mendelsche Phänotypenklassifikation

Die Klasseneinteilung eines Polymorphismus ist an die zulässigen Phänotypenkombinationen geknüpft. Da die Zahl der Entartungen stets größer ist als die Zahl der nach der Mendelschen Bedingung erlaubten Allelverhältnisse, kann ein bestimmtes Allelverhältnis in mehreren Mendelschen Vererbungsklassen vorkommen, die Zuordnung ist somit nicht eindeutig. So findet sich beispielsweise das Allelverhältnis 2:2 eines Bimorphismus sowohl in der Klasse 3 als auch in der Klasse 4 wieder (siehe Fig. 4), einmal als heterozygote Phänotypenkombination, ein andermal in einer Kombination aus homozygoten und heterozygoten Phänotypen. Innerhalb einer Grundgesamtheit kann ohne Änderung des Allelverhältnisses ein Klassenwechsel in der Generationenfolge nur zwischen äquivalenten Phänotypenklassen erfolgen. Die Tabelle in Fig. 4 zeigt die Phänotypen- und Allelverhältnisse bei zwei Merkmalen.

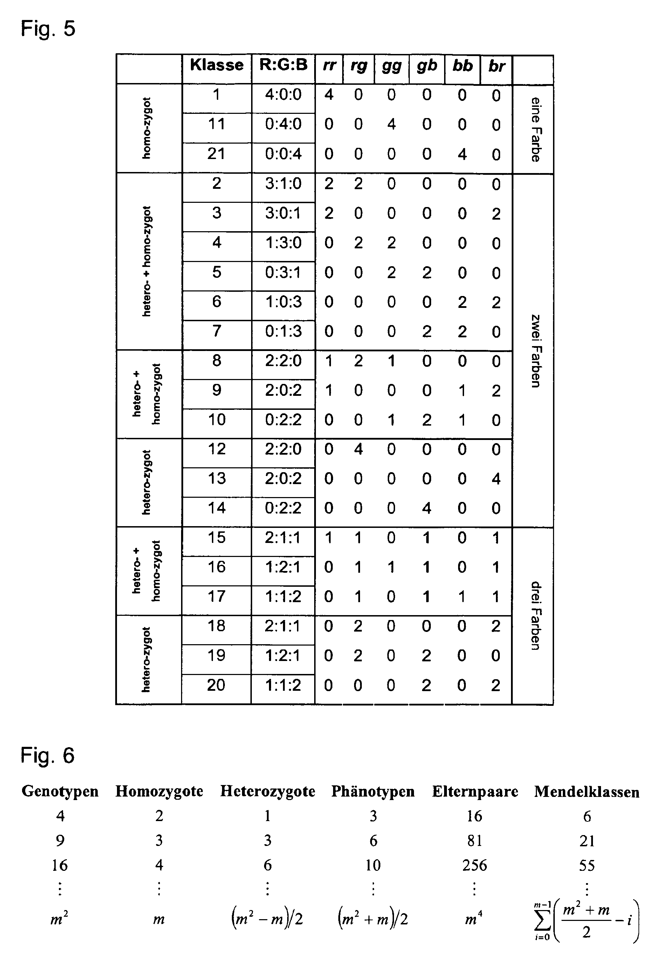

Das Verhältnis aus der Zahl der Mendelschen Phänotypenklassen zur Zahl der möglichen Allelkombinationen ändert sich mit steigender Zahl der Merkmale auf Kosten der Allelklassen, das heißt bei drei Merkmalen sind es bereits sechs Allelverhältnisse, die je zwei äquivalenten Phänotypenklassen angehören (siehe Fig. 5). Die Tabelle in Fig. 5 zeigt die Phänotypenklassen innerhalb der Mendel-Klassifikation bei drei Merkmalen.

Die Tabelle in Fig. 6 zeigt mehrdimensionale Polymorphismen. Dort sind die relevanten Größen, das heißt die Zahl der Geno- und Phänotypen, der Homo- und Heterozygoten sowie die Zahl der möglichen Mendelschen Vererbungstypen und Phänotypenklassen für eine beliebige Anzahl von Merkmalen angegeben. Rechnerisch ist die Zahl der Phänotypen gleich der Summe aus Homozygoten und Heterozygoten. Die Zahl der Genotypen erhält man aus der Zahl der Homozygoten und der doppelten Anzahl der Heterozygoten. Die Zahl der Elternpaare geht quadratisch mit der Zahl der Genotypen, die Zahl der Genotypen quadratisch mit der Zahl der Homozygoten.

In den Phänotypenklassen des nächsthöheren Polymorphismus (m+1)ten Grades sind sämtliche Klassen des nächstniedrigeren Polymorphismus m-ten Grades vollständig enthalten. Auch wenn in einer Generation trotz unterschiedlicher Phänotypen das gleiche Allelverhältnis herrscht, kann unter Berücksichtigung der zugehörigen Mendelklasse eine größere Unterscheidungstiefe getroffen werden.

### Phänotypenevolution und Entropieverlust

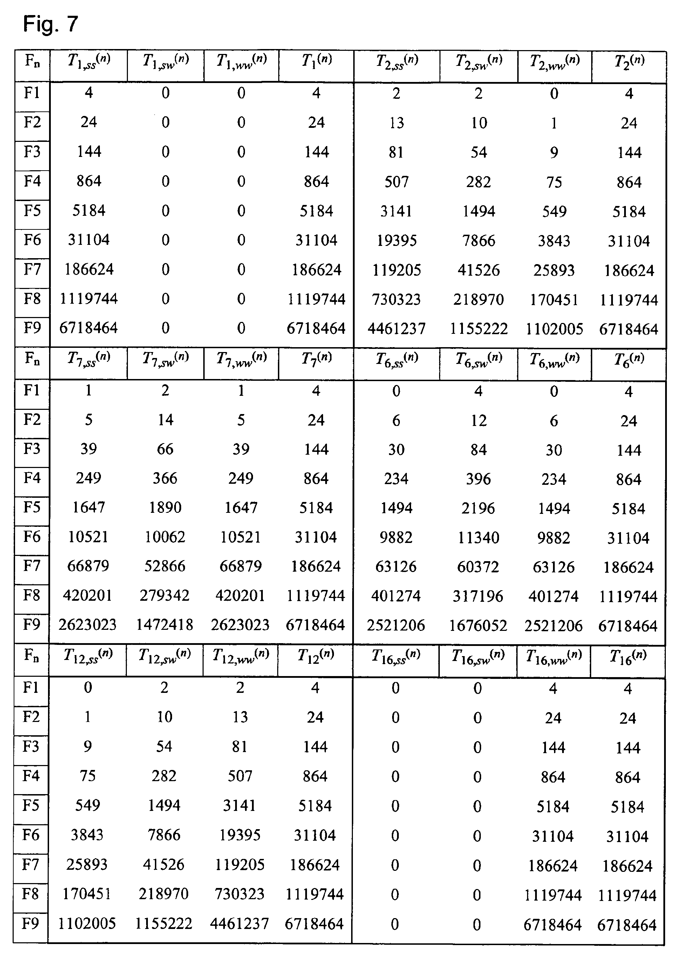

Für die Diskussion der Phänotypendivergenz beschränken wir uns auf einen Polymorphismus zweiten Grades. In der Tabelle in Fig. 7 sind für die ersten neun Generationen die dem Mendel-Operator zugeordneten Skalarprodukte der Basisvektoren aller möglichen Phänotypen für die jeweils ersten Klassenvertreter (Mendel-Typen 1, 2, 6, 7, 12 und 16) rechnerisch ermittelt und mit der über sie gemäß obiger Formel gebildeten Quersumme übersichtlich zusammengestellt.

Auch ganz ohne Selektion führt die Phänotypendivergenz zum Aussterben der Heterozygoten, während die Homozygoten beider Ausprägungen ihre maximalen Frequenzen annehmen, das heißt die Ordnung des Systems wird durch die Vererbung von Generation zu Generation immer weiter erhöht, so dass in der Näherung für unendlich viele Generationen nur reinerbige Phänotypen beziehungsweise orthogonale Zustände überleben. Ist darüber hinaus Selektion wirksam, so überlebt am Ende nur die homozygote Reinform des begünstigten Merkmals, das heißt die Entropie nimmt in allen möglichen Fällen ab. In der Natur wird in der Mehrheit der Fälle der Heterozygote bevorzugt, wenn eine günstige Eigenschaft mit einer nachteiligen korreliert ist, so dass sich Vor- und Nachteile wechselseitig aufheben. Dabei nimmt die Entropie zu. Bei technischer Nutzung dieses Prinzips lässt sich die Entropiezunahme vermeiden und somit stets Ordnung gewinnen.

Die aufsummierten Skalarprodukte aus der Tabelle in Fig. 7 sollen nun durch Normierung auf die Grundgesamtheit in relativen Häufigkeiten beziehungsweise als Wahrscheinlichkeiten ausgedrückt werden. Nachstehend werden dazu einige neue Begriffe eingeführt (zunächst nur am Beispiel von zwei Merkmalen).

| Wahrscheinlichkeit | Bedeutung |
|---|---|
| $P$ | Relative Häufigkeit des Phänotyps *ss* |
| $H$ | Relative Häufigkeit des Phänotyps *sw* |
| $Q$ | Relative Häufigkeit des Phänotyps *ww* |
| $P + Q + H = 1$ | Normierungsbedingung |
| $p$ | Relative Häufigkeit des *s*-Allels |
| $q$ | Relative Häufigkeit des *w*-Allels |
| $p + q = 1$ | Normierungsbedingung |

Die beiden Zahlen $p$ und $q$ nennt man Hardy-Weinberg-Koeffizienten. Sie stehen für die relative Häufigkeit der beiden Allele $s$ und $w$.

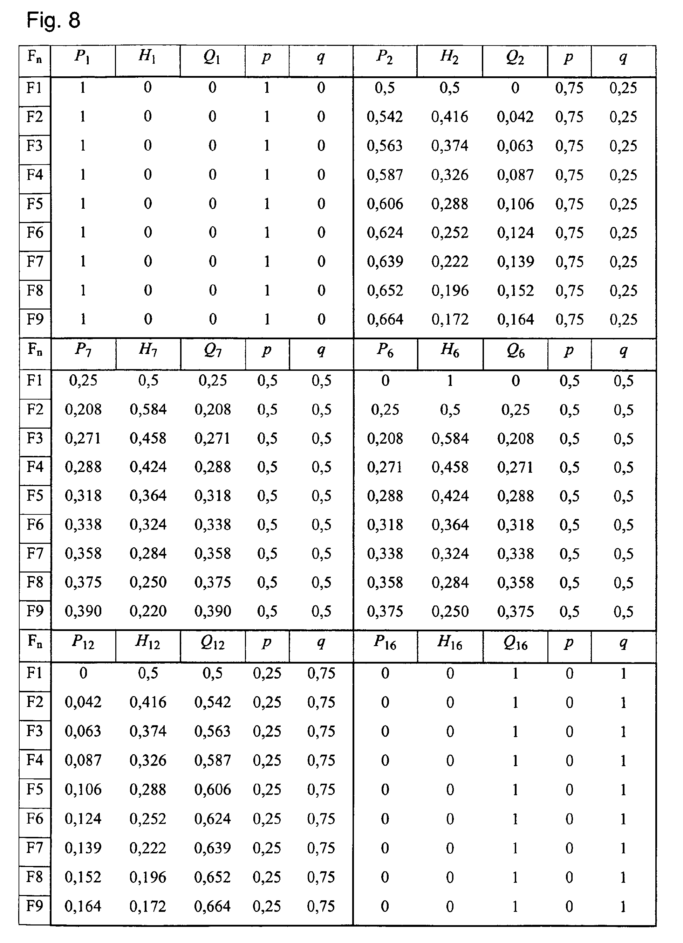

Das Resultat der Normierung ist in der Tabelle in Fig. 8 dargestellt. Sie zeigt den Entropieverlust durch Phänotypenselektion, wobei sich die Indizes auf den jeweils ersten Mendel-Typ der Phänotypenklassifikation beziehen.

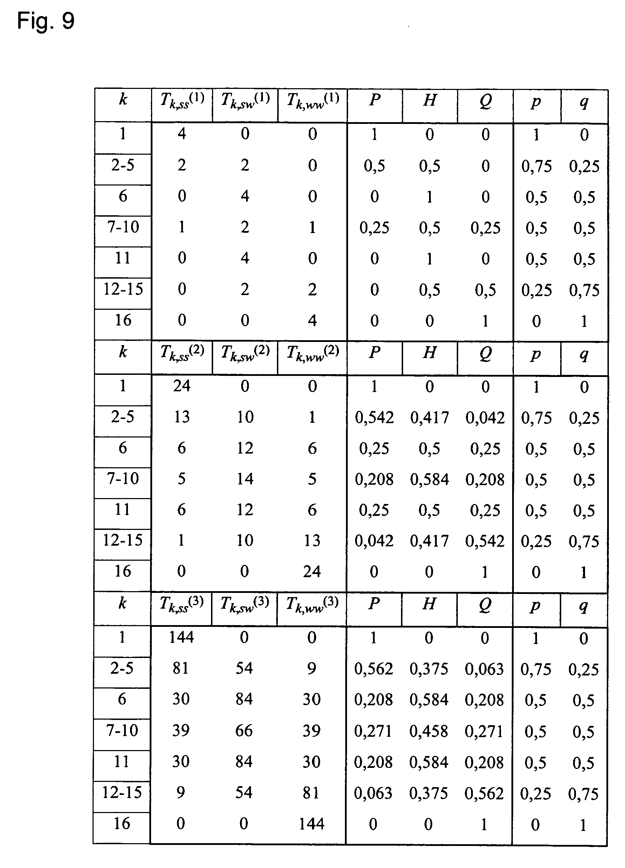

Ohne Selektion bleiben die Hardy-Weinberg-Koeffizienten p und q in einer statistischen Grundgesamtheit unabhängig von der Generation konstant, das statistische Gleichgewicht der Allele (siehe die Tabelle in Fig. 9, die die Vererbung des statistischen Gleichgewichts zeigt) wird nicht gestört. Des weiteren kann man ersehen, dass die Summe der Hardy-Weinberg-Koeffizienten einer gewissen Logik gehorcht, die sich in höhere Dimensionen fortpflanzt. Sie ist durch Viertel-Wahrheitswerte gekennzeichnet, wobei die Null keinerlei Wahrheitscharakter besitzt. Wegen der besonderen Bedeutung der Zahl 5 ist die der Vererbung zugrunde liegende Logik (im Unterschied zur binären Logik, bei der die Zahl 2 die prägende Rolle spielt) eine sogenannte Pentalogik.

Um zu verstehen, auf welchen Gesetzmäßigkeiten die Vererbung im allgemeinen Fall beruht, ist es notwendig, die sogenannte Hardy-Weinberg-Logik einzuführen.

**Die Hardy-Weinberg-Logik**

Die gewöhnliche aristotelische Logik widerspricht der alltäglichen Erfahrung. Wir urteilen nicht nach "absolut wahr" und "absolut falsch", sondern nach "eher wahrscheinlich" oder "unwahrscheinlich". Eine völlige Gewissheit gibt es nicht, nichts lässt sich wirklich beweisen. Reale Ereignisse sind Gauß- beziehungsweise normalverteilt, die absolute Wahrheit entspricht nur einer idealisierenden Annahme. Der Zufall lässt sich ebenfalls nicht vorhersagen. Beispiele aus der realen Welt sind die Heisenbergsche Unschärferelation und der radioaktive Zerfall. Wer auf die hundertprozentige Wahrheit setzt, kann häufig nicht entscheiden. Erst durch Aufgabe des Absolutheitsanspruchs werden Entscheidungen erleichtert. Dasselbe unscharfe Prinzip wurde von der Natur auch in der Vererbung realisiert. Die genetische Information der Nachkommen ist durch die Eltern nur mit einer bestimmten Wahrscheinlichkeit festgelegt, die den Mendelschen Gesetzen unterliegt.

Die Hardy-Weinberg-Logik ist eine sogenannte *Fuzzy logic*. Unabhängig von der Anzahl der zu vererbenden Merkmale gibt es stets fünf mögliche Entscheidungen:

| Wahrheitswert | Verbale Umschreibung |
|---|---|
| 1 | ja (wahr) |
| 0,75 | wahrscheinlich (eher ja) |
| 0,5 | vielleicht (indifferent, unentschlossen) |
| 0,25 | unwahrscheinlich (eher nein) |
| 0 | nein (falsch) |

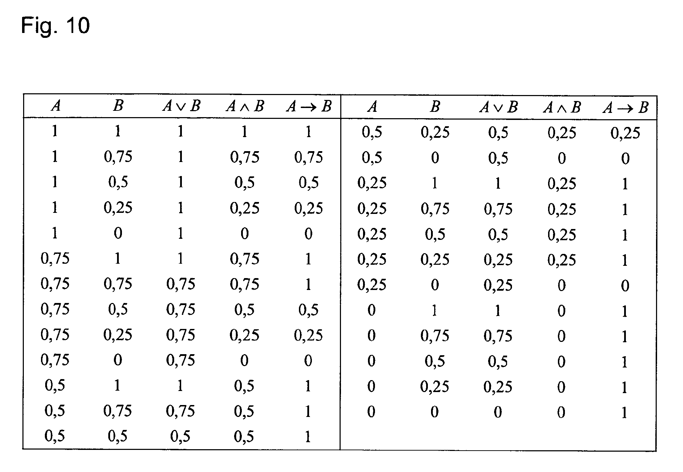

Die Summe aller möglichen Entscheidungen ist wie in der gewöhnlichen Logik stets kleiner oder gleich 1. Sämtliche logischen Verknüpfungen, die in der gewöhnlichen Logik gelten, lassen sich auch auf die Hardy-Weinberg-Logik übertragen. Die Ergebnisse der logischen UND- und ODER-Verknüpfung sowie der Implikation sind in der Tabelle in Fig. 10 zusammengestellt.

Ganz analog gelten die Dualitäts- und Komplementärgesetze der Hardy-Weinberg-Logik:

$$\neg 1 = 0 \qquad 1 \wedge \neg 1 = 0 \qquad 1 \vee \neg 1 = 1$$
$$\neg 0,75 = 0,25 \qquad 0,75 \wedge \neg 0,75 = 0,25 \qquad 0,75 \vee \neg 0,75 = 0,75$$
$$\neg 0,5 = 0,5 \qquad 0,5 \wedge \neg 0,5 = 0,5 \qquad 0,5 \vee \neg 0,5 = 0,5$$
$$\neg 0,25 = 0,75 \qquad 0,25 \wedge \neg 0,25 = 0,25 \qquad 0,25 \vee \neg 0,25 = 0,75$$
$$\neg 0 = 1 \qquad 0 \wedge \neg 0 = 0 \qquad 0 \vee \neg 0 = 1$$

In der nachstehenden Tabelle sind die gewöhnliche Binärlogik und die Hardy-Weinbergsche Pentalogik einander gegenübergestellt. Bei zwei Merkmalen gibt es genau fünf Kombinationsmöglichkeiten:

| | **Binärlogik** | | **Pentalogik** |
|---|---|---|---|
| | $p + q = 1$ | | $p + q = 1$ |
| (1) | $1 + 0 = 1$ | (1) | $1 + 0 = 1$ |
| (2) | $0 + 1 = 1$ | (2) | $0,75 + 0,25 = 1$ |
| | | (3) | $0,5 + 0,5 = 1$ |

(fortgesetzt)

|  | **Binärlogik** | **Pentalogik** |
|---|---|---|
| (4) |  | 0,25 + 0,75 = 1 |
| (5) |  | 0 + 1 = 1 |

Wird die Zahl der Merkmale um eins erhöht, muss ein weiterer Hardy-Weinberg-Koeffizient r eingeführt werden. Bei drei Merkmalen sind es bereits fünfzehn mögliche Kombinationen:

| | $p + q + r = 1$ | | | $p + q + r = 1$ | | | $p + q + r = 1$ |
|---|---|---|---|---|---|---|---|
| (1) | 1 + 0 + 0 = 1 | (6) | 0,5 + 0 + 0,5 = 1 | (11) | 0 + 1 + 0 = 1 |
| (2) | 0,75 + 0,25 + 0 = 1 | (7) | 0,25 + 0,75 + 0 = 1 | (12) | 0 + 0,75 + 0,25 = 1 |
| (3) | 0,75 + 0 + 0,25 = 1 | (8) | 0,25 + 0,5 + 0,25 = 1 1 | (13) | 0 + 0,5 + 0,5 = 1 |
| (4) | 0,5 + 0,5 + 0 = 1 | (9) | 0,25 + 0,25 + 0,5 = 1 | (14) | 0 + 0,25 + 0,75 = 1 |
| (5) | 0,5 + 0,25 + 0,25 = 1 | (10) | 0,25 + 0 + 0,75 = 1 | (15) | 0 + 0 + 1 = 1 |

Bei m Merkmalen gilt die Mendelbedingung in der Form: $p_1 + p_2 + ... + p_m = 1$. Die möglichen Kombinationen, die der Nebenbedingung gehorchen, dass die Summe der Allele gleich vier ist, sind für mehrdimensionale Systeme angegeben. Bestimmte Beiträge sind erst ab drei oder gar ab vier Merkmalen möglich:

| Dimension | 2 | 3 | 4 | 5 | 6 | 7 | ... | $m$ |
|---|---|---|---|---|---|---|---|---|
| 1×1 | 2 | 3 | 4 | 5 | 6 | 7 | ... | $m$ |
| 2×0,5 | 1 | 3 | 6 | 10 | 15 | 21 | ... | $\sum_{i=1}^{m-1}(m-i)$ |
| 1×0,75+1×0,25 | 2 | 6 | 12 | 20 | 30 | 42 | ... | $2\sum_{i=1}^{m-1}(m-i)$ |
| 1×0,5+2×0,25 |  | 3 | 12 | 30 | 60 | 105 | ... | $m\left[\binom{m-2}{2}+m-2\right]$ |
| 4×0,25 |  |  | 1 | 5 | 15 | 35 | ... | $\sum_{j=4}^{m}\sum_{i=1}^{j-3}\left[\binom{i}{2}+i\right]$ |
| $i_1 + i_2 + ... + i_m$ | 5 | 15 | 35 | 70 | 126 | 210 | | |

## Die Hardy-Weinbergsche Allelklassifikation

Neben der Mendelschen Phänotypenklassifikation gibt es in der Vererbung noch eine korrespondierende Hardy-Weinberg-Klassifikation aufgrund des entsprechenden Allelverhältnisses. Nachstehend sind die möglichen Allelverhältnisse und die entsprechenden Hardy-Weinberg-Klassen (für drei Merkmale) einander gegenübergestellt.

| (1) | 4:0:0 | (6) | 2:0:2 | (11) | 0:4:0 |
|---|---|---|---|---|---|
| (2) | 3:1:0 | (7) | 1:3:0 | (12) | 0:3:1 |
| (3) | 3:0:1 | (8) | 1:2:1 | (13) | 0:2:2 |
| (4) | 2:2:0 | (9) | 1:1:2 | (14) | 0:1:3 |
| (5) | 2:1:1 | (10) | 1:0:3 | (15) | 0:0:4 |

Die folgende Tabelle zeigt für den allgemeinen Fall, wie viele Hardy-Weinberg-Klassen unter der Nebenbe-

dingung $i_1 +...+ i_m = 4$ möglich sind, und listet die fünf Beiträge auf, aus denen sich die Resultate zusammensetzen.

| Dim. | 4+... | 3+... | 2+... | 1+... | 0+... | $i_1 +... + i_m$ |
|---|---|---|---|---|---|---|
| 2 | 1 | 1 | 1 | 1 | 1 | 5 |
| 3 | 1 | 2 | 3 | 4 | 5 | 15 |
| 4 | 1 | 3 | 6 | 10 | 15 | 35 |
| 5 | 1 | 4 | 10 | 20 | 35 | 70 |
| 6 | 1 | 5 | 15 | 35 | 70 | 126 |
| 7 | 1 | 6 | 21 | 56 | 126 | 210 |
| ⋮ | ⋮ | ⋮ | ⋮ | ⋮ | ⋮ | ⋮ |
| $m$ | 1 | $m$-1 | $\sum\limits_{i=1}^{m-1} i$ | $\sum\limits_{j=1}^{m-1}\sum\limits_{i=1}^{j} i$ | $\sum\limits_{k=1}^{m-1}\sum\limits_{j=1}^{k}\sum\limits_{i=1}^{j} i$ | $\sum\limits_{k=1}^{m}\sum\limits_{j=1}^{k}\sum\limits_{i=1}^{j} i$ |

Jeder Mendelschen Phänotypenklasse ist genau eine Hardy-Weinbergsche Allelklasse zugeordnet, umgekehrt aber nicht. Für drei Merkmale ist die jeweilige Zuordnung der folgenden Tabelle zu entnehmen.

| Typ | Mendel-Klasse | | | | | | | Hardy-Weinberg-Klasse | | | |
|---|---|---|---|---|---|---|---|---|---|---|---|
| | | *rr* | *rg* | *gg* | *gb* | *bb* | *br* | | *p* | *q* | *r* |
| 1 | 1 | 4 | 0 | 0 | 0 | 0 | 0 | 1 | 1 | 0 | 0 |
| 2, 4, 10, 28 | 2 | 2 | 2 | 0 | 0 | 0 | 0 | 2 | 0,75 | 0,25 | 0 |
| 3, 7, 19, 55 | 3 | 2 | 0 | 0 | 0 | 0 | 2 | 3 | 0,75 | 0 | 0,25 |
| 14, 32, 38, 40 | 4 | 0 | 2 | 2 | 0 | 0 | 0 | 7 | 0,25 | 0,75 | 0 |
| 42, 44, 50, 68 | 5 | 0 | 0 | 2 | 2 | 0 | 0 | 12 | 0 | 0,75 | 0,25 |
| 27, 63, 75, 79 | 6 | 0 | 0 | 0 | 0 | 2 | 2 | 10 | 0,25 | 0 | 0,75 |
| 54, 72, 78, 80 | 7 | 0 | 0 | 0 | 2 | 2 | 0 | 14 | 0 | 0,25 | 0,75 |
| 11, 13, 29, 31 | 8 | 1 | 2 | 1 | 0 | 0 | 0 | 4 | 0,5 | 0,5 | 0 |
| 21, 25, 57, 61 | 9 | 1 | 0 | 0 | 0 | 1 | 2 | 6 | 0,5 | 0 | 0,5 |
| 51, 53, 69, 71 | 10 | 0 | 0 | 1 | 2 | 1 | 0 | 13 | 0 | 0,5 | 0,5 |
| 41 | 11 | 0 | 0 | 4 | 0 | 0 | 0 | 11 | 0 | 1 | 0 |
| 5, 37 | 12 | 0 | 4 | 0 | 0 | 0 | 0 | 4 | 0,5 | 0,5 | 0 |
| 9, 73 | 13 | 0 | 0 | 0 | 0 | 0 | 4 | 6 | 0,5 | 0 | 0,5 |
| 45, 77 | 14 | 0 | 0 | 0 | 4 | 0 | 0 | 13 | 0 | 0,5 | 0,5 |
| 12, 16, 20, 22, 30, 34, 56, 58 | 15 | 1 | 1 | 0 | 1 | 0 | 1 | 5 | 0,5 | 0,25 | 0,25 |
| 15, 17, 33, 35, 47, 49, 65, 67 | 16 | 0 | 1 | 1 | 1 | 0 | 1 | 8 | 0,25 | 0,5 | 0,25 |
| 24, 26, 48, 52, 60, 62, 66, 70 | 17 | 0 | 1 | 0 | 1 | 1 | 1 | 9 | 0,25 | 0,25 | 0,5 |
| 6, 8, 46, 64 | 18 | 0 | 2 | 0 | 0 | 0 | 2 | 5 | 0,5 | 0,25 | 0,25 |
| 23, 39, 43, 59 | 19 | 0 | 2 | 0 | 2 | 0 | 0 | 8 | 0,25 | 0,5 | 0,25 |
| 18, 36, 74, 76 | 20 | 0 | 0 | 0 | 2 | 0 | 2 | 9 | 0,25 | 0,25 | 0,5 |
| 81 | 21 | 0 | 0 | 0 | 0 | 4 | 0 | 15 | 0 | 0 | 1 |

In der vorstehenden Tabelle wurde mit dem Begriff "Typ" in der linken Spalte die Zahl der möglichen Kombinationen bezeichnet, die ein Elternpaar in der nächsten Generation, der Kind-Generation oder auch F1-Generation genannt, besitzen kann. Dieser Typ repräsentiert die Alleltypen (das Quadrat der Zahl der Genotypen und damit die vierte Potenz der Merkmale) und somit die Klassenvielfalt, das heißt die Maximalzahl der möglichen Anordnungen.

**Hardy-Weinberg-Zahlen**

In der Genetik sind innerhalb der Pentalogik nur solche Kombinationen erlaubt, die in der Summe 1 ergeben. Zahlen, die diese Normierungsforderung erfüllen, nennt man Hardy-Weinberg-Zahlen. Die Menge der Hardy-Weinberg-Zahlen ist nach oben offen.

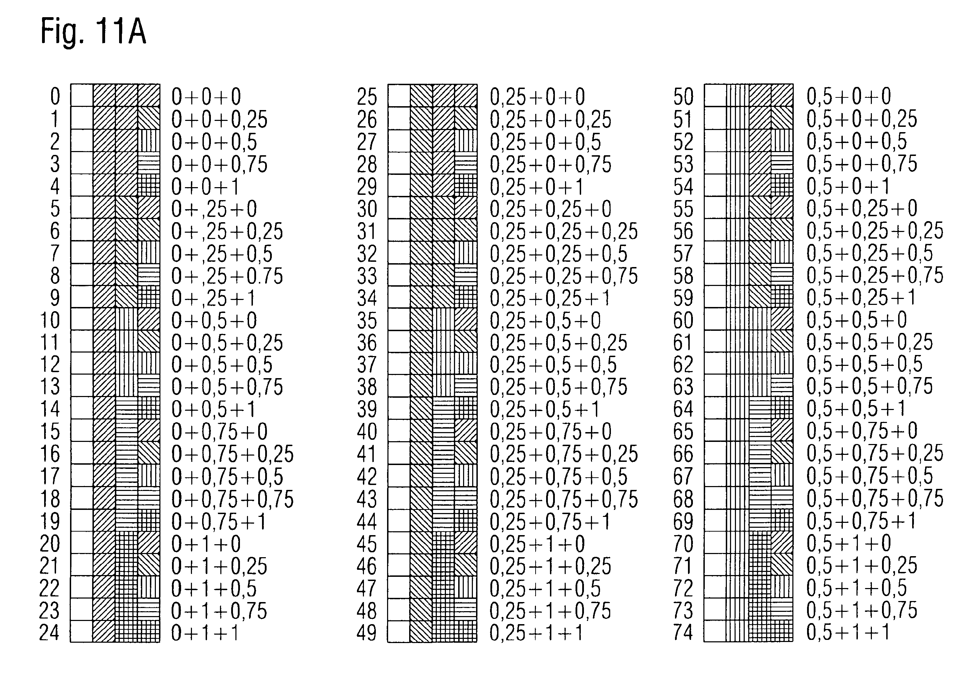

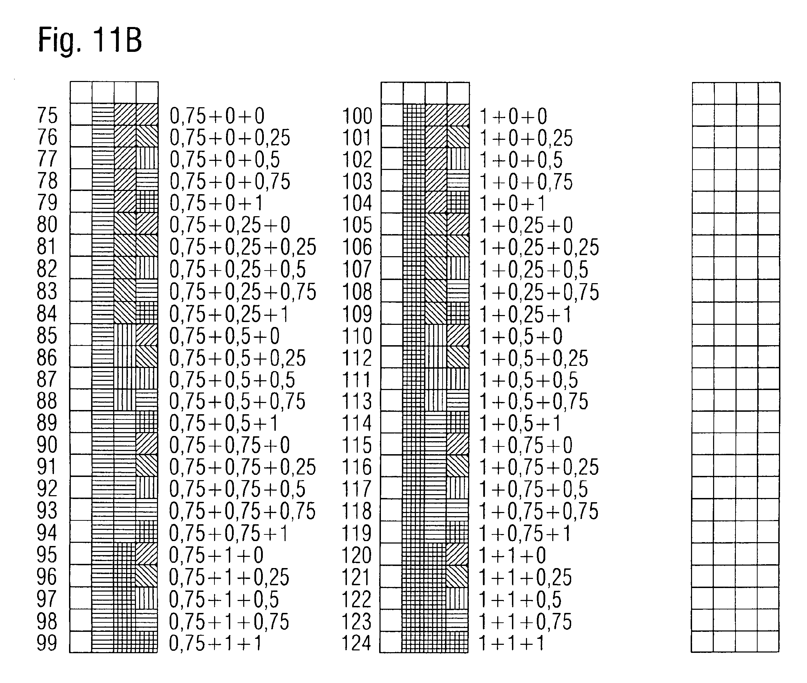

Hardy-Weinberg-Zahlen n-ter Ordnung schließen Hardy-Weinberg-Zahlen ($n$-1)ter Ordnung ein ($n\geq2$). Die Anzahl der Hardy-Weinberg-Zahlen innerhalb einer Ordnung entspricht der Zahl der Fälle, die die Mendelsche Bedingung erfüllen, bei der nur solche Glieder addiert werden dürfen, die in der Summe 1 ergeben. Fig. 11 zeigt alle 125 Kombinationsmöglichkeiten in dreidimensionaler RGB-Darstellung. Im allgemeinen Fall, das heißt bei $m$ Merkmalen, gibt es insgesamt $5^m$ Kombinationen.

Eine algebraische Darstellung des Zahlensystems der Pentalogik erhält man, wenn man die Pluszeichen zwischen zwei Stellen in Fig. 11 einfach weglässt und die Dezimalzahlen durch fraktale Brüche darstellt. Es können wahlweise auch die Zahlen 0 bis 4 verwendet werden. Führende Nullen können weggelassen werden. Einen Vergleich der geläufigsten Zahlensysteme zeigt die nachfolgende Tabelle. Während im Binärsystem (= Dualsystem) nach je zwei Zahlen eine neue Ordnung begonnen werden muss, ist dies beim Hardy-Weinberg-System (H.-W.) erst nach jeweils fünf Zahlen notwendig (soviel, wie eine Hand Finger hat). Insofern benötigt es weniger Stellen als das Dualsystem und kommt im Vergleich zum Dezimalsystem mit weniger Symbolen aus, stellt also einen guten Kompromiss zwischen zwei gegensätzlichen Forderungen dar.

| Hex. | Dual | Dez. | H.-W. | Hex. | Dual | Dez. | H.-W. |
|------|------|------|-------|------|------|------|-------|
| 0 | 0000 | 0 | 000 | 8 | 1000 | 8 | 013 |
| 1 | 0001 | 1 | 001 | 9 | 1001 | 9 | 014 |
| 2 | 0010 | 2 | 002 | A | 1010 | 10 | 020 |
| 3 | 0011 | 3 | 003 | B | 1011 | 11 | 021 |
| 4 | 0100 | 4 | 004 | C | 1100 | 12 | 022 |
| 5 | 0101 | 5 | 010 | D | 1101 | 13 | 023 |
| 6 | 0110 | 6 | 011 | E | 1110 | 14 | 024 |
| 7 | 0111 | 7 | 012 | F | 1111 | 15 | 030 |

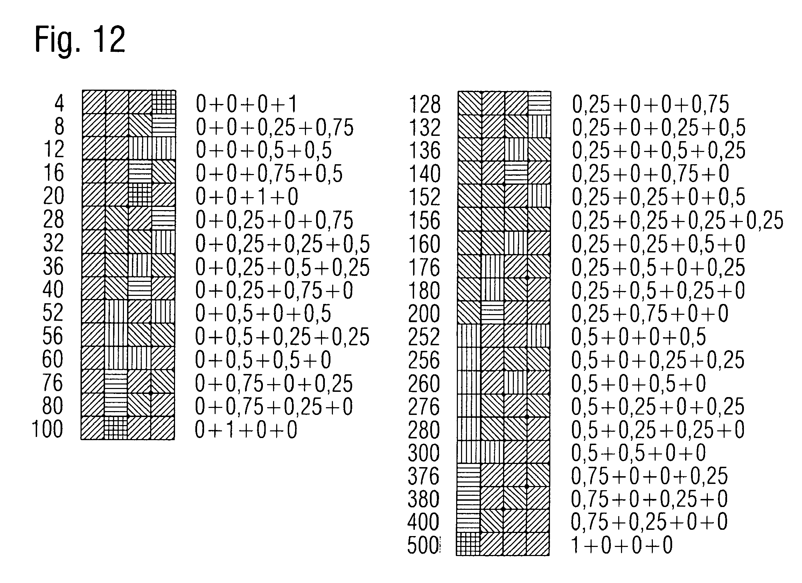

Die 35 Hardy-Weinberg-Zahlen bis einschließlich vierter Ordnung sind in Fig. 12 dargestellt. Dabei fällt eine bestimmte Regelmäßigkeit des Bildungsgesetzes auf, auf das wir hier nicht näher eingehen wollen. Wichtig ist nur, dass es genauso viele Hardy-Weinberg-Zahlen gibt, wie es Hardy-Weinberg-Klassen gibt. Man beachte, dass Hardy-Weinberg-Zahlen in ihrem eigenen System eine andere Darstellung besitzen als im Dezimalsystem, nämlich stets eine erlaubte Allelkombination angeben, die in der Ziffernsumme nicht größer als 4 sein kann.

Jede Hardy-Weinberg-Zahl ist durch vier teilbar. In der Regel ergeben Hardy-Weinberg-Zahlen durch Addition wieder eine Hardy-Weinberg-Zahl, aber nicht alle Kombinationen sind zulässig, wenn sie nicht die Mendelbedingung erfüllen. Es lassen sich auch andere Zahlen innerhalb der Pentalogik zu einer Hardy-Weinberg-Zahl addieren, aber nicht alle Kombinationen sind im Rahmen der Vererbung sinnvoll. Welche Regeln für die Addition gelten, zeigt der nächste Abschnitt.

## Rechenregeln für die Hardy-Weinberg-Addition

Im Hardy-Weinberg-Zahlensystem wird stellenweise addiert. Stellen werden wie bei der gewöhnlichen Addition addiert, bis ihre Summe 4 übersteigt. Ist die Summe größer als 4, so wird 5 abgezogen und die nächsthöhere Stelle wird um 1 erhöht. Damit kommt man bis zur Zahl 24 mit zwei Stellen aus, bis zur Zahl 124 mit drei und so weiter. Die Methode lässt sich in den Beispielen in der folgenden Tabelle gut studieren. Dort wurden jeweils nur Hardy-Weinberg-Zahlen addiert, die in ihrer Summe wieder eine Hardy-Weinberg-Zahl ergeben. Die beiden Summanden entsprechen den Allelpaaren der Elterngeneration für zwei beziehungsweise drei Merkmale.

| Gleichung | Addition | Gleichung | Addition |
|-----------|----------|-----------|----------|
| 4+4=8 | 04+04=13 | 20+20=40 | 040+040=130 |
| 8+4=12 | 13+04=22 | 40+12=52 | 130+022=202 |
| 12+4=16 | 22+04=31 | 36+16=52 | 121+031=202 |
| 8+8=16 | 13+13=31 | 32+20=52 | 112+040=202 |
| 16+4=20 | 31 +04=40 | 52+4=56 | 202+004=211 |
| 12+8=20 | 22+13=40 | 40+16=56 | 130+031=211 |
| 20+8=28 | 040+013=103 | 36+20=56 | 121+040=211 |

(fortgesetzt)

| Gleichung | Addition | Gleichung | Addition |
|---|---|---|---|
| 16+12=28 | 031+022=103 | 28+28=56 | 103+103=211 |
| 12+16=28 | 022+031=103 | 56+4=60 | 211 +004=220 |
| 8+20=28 | 013+040=103 | 52+8=60 | 202+013=220 |
| 28+4=32 | 103+004=112 | 40+20=60 | 130+040=220 |
| 20+12=32 | 040+022=112 | 32+28=60 | 112+103=220 |
| 16+16=32 | 031 +031 = 112 | 60+16=76 | 220+031 =301 |
| 12+20=32 | 022+040= 112 | 56+20=76 | 211 +040=301 |
| 4+28=32 | 004+103=112 | 40+36=76 | 130+121=301 |
| 32+4=36 | 112+004=121 | 76+4=80 | 301+004=310 |
| 28+8=36 | 103+013=121 | 60+20=80 | 220+040=310 |
| 20+16=36 | 040+031=121 | 52+28=80 | 202+103=310 |
| 36+4=40 | 121+004=130 | 40+40=80 | 130+ 130=310 |
| 32+8=40 | 112+013=130 | 80+20=100 | 310+040=400 |
| 28+12=40 | 103+022=130 | 60 + 40 = 100 | 220+130=400 |

Entsprechende Regeln gelten auch für die Multiplikation, die wir hier aber nicht diskutieren brauchen.

**Anwendung der Vererbung in der Datenfusion**

Die bisher aufgestellten Regeln lassen sich erfindungsgemäß in der Datenfusion zur Objektklassifizierung einsetzen. Jedes "gesehene" Objekt erbt dabei die Eigenschaft seines Sensors. Diese Eigenschaften müssen korrelierbar sein, können aber bei räumlich unveränderlichen Objekten auch zeitlich zurückliegen und brauchen dann nicht notwendig aktuell gemessen werden. Eine gewisse Ausnahme stellen zeitlich langsam veränderliche Gleichgewichtsprozesse dar, beispielsweise thermische Abkühlung je nach momentaner Energiezufuhr (zum Beispiel durch Abstellen des Motors).

Alle Eigenschaften des betrachteten Objekts werden paarweise fusioniert. Ererbte Eigenschaften können in Form von Allelpaaren hinzukommen.

Auf jeder mit Sensoren zur Objektbeobachtung versehenen Plattform ergeben sich abhängig von den verwendeten Sensoren als Beobachtungsergebnis unterschiedliche Phänotypen, die entweder sofort oder nach und nach (via Datenlink) zu einem Genotyp zusammengesetzt werden. Erst der Genotyp erlaubt eine klare Klassifizierung bezüglich des Mendel-Typs und des Allelverhältnisses. Die Identifizierung wird um so sicherer, je mehr ererbte Eigenschaften in der Generationenabfolge herangezogen werden. Das Verfahren entspricht damit weitgehend einer genetischen DNA-Analyse, wobei anhand einer endlichen Anzahl von Merkmalen statistisch hochgerechnet werden kann, wie eindeutig der Treffer ist. Die zu identifizierenden Objekte müssen nach Mendel-Typen klassifiziert in einer Objektdatenbank abgelegt sein, wobei allerdings die Objektliste nur eine Aussage darüber zu machen braucht, welches Objekt welchem Mendel-Typ entspricht. Das Objekt muss dazu allerdings vorher «durchdacht» worden sein, wobei ihm diejenigen Attribute zugeordnet worden sein müssen, die es ausmachen. Ein Beispiel: Für ein Radarobjekt reicht es aus, mit einem Radarsensor einen Peak zu messen und das Signal zu lokalisieren. Für die Identifizierung werden dann die Merkmale anderer Sensoren zu Hilfe genommen, wobei ein Merkmal, nämlich die Geschwindigkeit des Objekts, als unabhängige Zweitinformation durchaus wieder vom Radarsensor stammen kann. Diese beiden Informationen reichen aus, um das gesehene Objekt als Fahrzeug beziehungsweise Flugzeug zu klassifizieren. Um nun die Klassifizierung zu verfeinern, müssen auch die Merkmale verfeinert werden, zum Beispiel können als Kontextwissen typische Geschwindigkeitsklassen eingeführt werden. Wird das Merkmal, dass die Geschwindigkeit in dem zu erwartenden Bereich liegt, bestätigt, so kann beispielsweise ein Verkehrsflugzeug im Unterschallbereich von einem Flugkörper im Überschallbereich klar unterschieden werden. Weitere Unterscheidungen können zum Beispiel aufgrund der Objektgröße getroffen werden. Auch hier reicht es aus, eine charakteristische Trenngröße einzuführen, unterhalb der alle Objekte entweder als Pkw oder als Lkw eingestuft werden. Dazu bedarf es eines Sensors, der in der Lage ist, die Objektgröße vermessen zu können. Ist ein Objekt gleichmäßig wärmer als die Umgebungstemperatur, so lässt sich die Objektgrößte mit einem Infrarotsensor bestimmen, der die Eigenschaft Infrarotobjekt misst und zudem eine ungefähre Bestimmung der Objektgröße gestattet. Um nun die grundlegende Entscheidung zu treffen, ob ein gesuchtes Fahrzeug freundlich oder feindlich ist, bedarf es der Detektion einer Freund-/Feindeigenschaft. Im einfachsten Fall kann dazu Kontextwissen als Merkmal herangezogen werden, indem beispielsweise in einem ausgewiesenen geographischen Areal jedes bewegte Objekt mit den betreffenden Eigenschaften als feindlich angesehen wird. Operieren eigene Kräfte in feindlichem Gebiet, so kann nur eine aktive Freund-/Feinderkennung gegnerische Fahrzeuge beziehungsweise Fahrzeuginsassen von den eigenen unterscheiden.

Es können auch Eigenschaften gezielt als feindlich deklariert werden, indem etwa mit einem geeigneten Sensor die Sprengstoffeigenschaft geprüft wird. Wird diese Eigenschaft in dem entdeckten Fahrzeug festgestellt, so transportiert es mit großer Wahrscheinlichkeit Waffen und kann damit als feindlich eingestuft werden. In jedem Fall muss bei der Festlegung von Bedrohungen immer auch geprüft werden, welche Möglichkeiten der Verwechslung und Tarnung gegen die drohende Identifizierung ergriffen worden sein können.

**Bestimmung des Mendel-Typs und der Vererbungsklasse**

Mendelsche Vererbungstypen können in einer beliebigen Generation bestimmt werden (bei nur drei Merkmalen reichen F0 und F1 völlig aus), da das Allelverhältnis immer weitervererbt wird (die Vererbung ist ohne Selektion alleltreu). Nach Aufsummierung der Phänotypen muss das Phänotypenverhältnis auf den kleinsten gemeinsamen Nenner gebracht werden. Da nicht jedes Phänotypenverhältnis zulässig ist, ist mit Hilfe der Regeln für die Phänotypenkonversion auf ein zulässiges Verhältnis zu transformieren. Aus der Alleltreue der Vererbung leiten sich auch die folgenden Regeln für die Phänotypenkonversion ab.

Seien x, y und z drei verschiedene Allele eines polymorphen Gens. Dann gelten folgende Rechenregeln:

| | |
|---|---|
| $xy = yx$ | Kommutativgesetz |
| $xx + yy = 2xy$ | Pythagoras |
| $xx + yz = xy + xz$ | Distributivgesetz |
| $xx + yy + zz = xy + yz + zx$ | Pythagoras |
| $xy + yz = xz + yy$ | Assoziativgesetz |

Demnach muss auf der linken wie auf der rechten Seite der Gleichungen die gleiche Anzahl von Allelen stehen. Mit diesen Regeln ist es möglich, aus Homozygoten Heterozygote zu machen und umgekehrt.

Um Eindeutigkeit zu gewährleisten, ist auch das Verhältnis der Messungen zu berücksichtigen. Der Mendel-Typ muss homozygot sein, wenn das Verhältnis asymmetrisch ist, und umgekehrt.

Nachfolgend dazu ein Beispiel: Ein Objekt habe drei Eigenschaften (r, g, b) und werde mit vier Sensoren betrachtet (zwei davon seien identisch). Zunächst werden für alle Plattformkombinationen paarweise die "Kinder" eingesammelt. Autokorrelationen zwischen Sensoren, die ein und derselben Plattform zuzuordnen sind, werden wie Kreuzkorrelationen behandelt. Aus den Phänotypen wird schließlich der Genotyp zusammengesetzt und daraus das Allelverhältnis bestimmt. Bei unstimmigen Verhältnissen müssen "fehlende" Kinder ergänzt werden. Diese können sich auch aus der Vererbung herleiten. Der Genotyp muss in jedem Fall auf ein zulässiges Phänotypen- und Allelverhältnis gebracht werden. Doppelt vorhandene Allelpaare können gestrichen, bereits vorhandene nochmals hinzugefügt werden. Daraus folgt eindeutig der Mendel-Typ und damit sowohl die Phänotypen- als auch die Hardy-Weinberg-Klasse.

Ein Allelverhältnis ist geradzahlig, wenn die Hinzunahme eines Sensors für eine bereits vorhandene Eigenschaft ändert in der Regel das Allelverhältnis und gibt damit einem Merkmal eine größere Zuverlässigkeit. Man gewinnt auf diese Weise eine weitere Unterscheidungsmöglichkeit hinsichtlich der Klassifizierung, da sich die einmal getroffene Klassifikation solange weitervererbt wie kein neues Merkmal hinzukommt. Wird ein einzelnes Merkmal zu einem späteren Zeitpunkt erneut festgestellt, so ändert sich dadurch am Typ nichts, solange das Objekt selbst nicht verlorengeht (Beispiel: zwei Sensoren rot, ein Sensor grün, R : G = 2 : 1, also entweder 2 : 2 oder 3 : 1; drei Sensoren rot, ein Sensor grün, R : G = 3 : 1).

**Anwendung der Hardy-Weinberg-Logik in der Zielverfolgung**

Verschmelzen zwei bewegte Objekte weil sich ihre Spuren kreuzen, so können diese nach dem Auseinanderlaufen anhand der Hardy-Weinberg-Klassifizierung erneut zugeordnet werden, vorausgesetzt, es werden wieder dieselben Sensoren verwendet wie beim vorherigen Auffinden der Objekte. Waren die beiden Objekte bezüglich ihres Typs jedoch bereits vor dem Kreuzen nichtunterscheidbar, so bleiben sie auch nach dem Kreuzen nichtunterscheidbar.

**Vorteile der objektorientierten Objekterkennung**

Werden mehrere Phänotypen eines Objekts durch Datenfusion zusammengefasst, um eine möglichst vollständige Beschreibung von dem betrachteten Objekt zu liefern, so eignet sich die hier vorgestellte *Fuzzy Logik* aufgrund ihrer Objektorientierung besser als die traditionelle binäre Logik, die nur zwei Wahrheitswerte kennt. Die gewöhnliche Logik basiert auf Absolutentscheidungen. Bedingungen müssen zu 100 % als richtig erkannt worden sein, ehe eine Entscheidung herbeigeführt werden kann. Das widerspricht fast ausnahmslos der Realität, wo häufig nur mit Wahrscheinlichkeiten argumentiert wird.

In der Hardy-Weinberg-Logik kann auch ein Wahrheitswert kleiner als 1 hinreichen, um eine richtige Entscheidung zu treffen, mit einem jeweils den Umständen angepassten geringen Restrisiko. Es ist damit im militärischen Bereich beispielsweise möglich, einen Gegner früher zu bekämpfen, als er eigentlich bekämpft werden dürfte (wenn er nämlich zu 100 % als Gegner erkannt wurde). Unter Umständen kann auch eine Gegenmaßnahme schon früher eingeleitet werden, als sie normalerweise erfolgen würde (nämlich wenn es schon zu spät sein kann).

**Ausführungsbeispiele des erfindungsgemäßen Verfahrens**

Das erfindungsgemäße Verfahren und das darin realisierte Prinzip zur Datenfusion werden nachstehend anhand der Figuren näher erläutert.

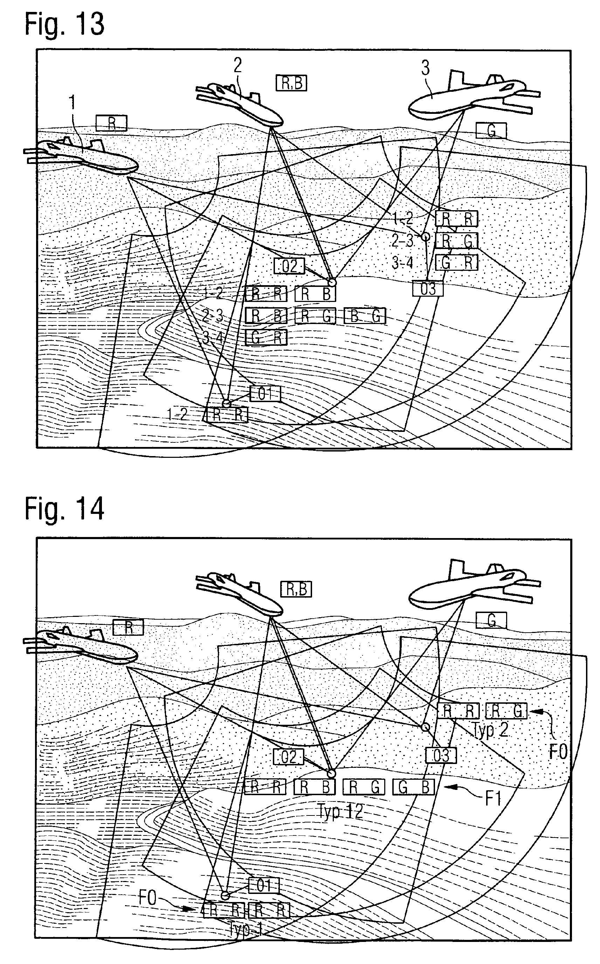

Fig. 13 zeigt einen Bereich der Erdoberfläche, in welchem aufzuklärende Objekte vermutet werden. Dieser Bereich wird von drei Aufklärungsflugkörpern 1, 2, 3 überflogen. Die Flugkörper 1, 2, 3 sind mit unterschiedlichen Sensoren bestückt. Die Sensoren sind hier allgemein mit den Buchstaben R, G, B bezeichnet. Der Flugkörper 1 ist mit einem Sensor R ausgestattet. Der Flugkörper 2 ist mit einem Sensor R und einem Sensor B ausgestattet und der Flugkörper 3 ist mit einem Sensor G ausgestattet.

In der in Fig. 13 dargestellten Situation werden von den drei Flugkörpern 1, 2, 3 drei unterschiedliche Objekte O1 02, 03 geortet. Dabei wird das Objekt O1 von den R-Sensoren der Flugkörper 1 und 2 erfasst. Das Objekt 02 wird vom Sensor R des Flugkörpers 1, von den Sensoren R und B des Flugkörpers 2 und vom Sensor G des Flugkörpers 3 erfasst. Das Objekt 03 wird vom Sensor R des Flugkörpers 1, vom Sensor R des Flugkörpers 2 und vom Sensor G des Flugkörpers 3 erfasst. Aufgrund der von den Sensoren der drei Flugkörper gelieferten Sensorsignale werden den einzelnen Objekten durch paarweises Kombinieren der Sensoreigenschaften Identifikations-Eigenschaftspaare zugeordnet; dabei gilt:

für das Objekt O1:

Die Erfassung durch den Sensor R des Flugkörpers 1 und den Sensor R des Flugkörpers 2 führt zum Eigenschaftspaar RR;

für das Objekt O2:

Die Erfassung durch den Sensor R des Flugkörpers 1 und die Sensoren R und B des Flugkörpers 2 führt zu den Identifikationseigenschaften RR und RG. Die Erfassung durch die Sensoren R und B des Flugkörpers 2 und den Sensor G des Flugkörpers 3 führt zu den Identifikations-Eigenschaftspaaren:

RB, RG und BG. Die Erfassung durch den Sensor G des Flugkörpers 3 und den Sensor R des Flugkörpers 1 führt zum Identifikations-Eigenschaftspaar GR. Es ergeben sich für das Objekt 02 somit die Identifikations-Eigenschaftspaare RR, RB, RB, RG, BG und GR;

für das Objekt O3:

Die Erfassung durch den Sensor R des Flugkörpers 1 und den Sensor R des Flugkörpers 2 führt zum Identifikations-Eigenschaftspaar RR. Die Erfassung durch den Sensor R des Flugkörpers 2 und den Sensor G des Flugkörpers 3 führt zum Identifikations-Eigenschaftspaar RG und die Erfassung des Objekts 03 durch den Sensor G des Flugkörpers 3 und den Sensor R des Flugkörpers 1 führt zum Erhalt des Identifikations-Eigenschaftspaars GR. Es ergeben sich für das Objekt 03 somit die Identifikations-Eigenschaftspaare RR, RG und GR.

Die so ermittelten Identifikations-Eigenschaftspaare der drei Objekte werden für jedes Objekt zu einer Sammlung von Identifikations-Eigenschaftspaaren zusammengefasst, wobei beim Zusammenfassen der ermittelten Identifikations-Eigenschaftspaare in einem ersten Zwischenschritt mehrfach ermittelte Identifikations-Eigenschaftspaare nur einmal in die Sammlung übernommen werden. Die Reihenfolge der Eigenschaften innerhalb der Identifikations-Eigenschaftspaare bleibt dabei unberücksichtigt, so dass beispielsweise RG = GR gilt. Das führt für die einzelnen Objekte zu den folgenden vorläufigen Sammlungen von Identifikations-Eigenschaftspaaren:

Objekt O1:     RR
Objekt O2:     RR, RB, RG und BG
Objekt O3:     RR, RG

Diese vorläufigen Sammlungen von Identifikations-Eigenschaftspaaren werden anschließend in einem zweiten Zwischenschritt daraufhin überprüft, ob sie einer Allelklasse entsprechen. Diese Prüfung lässt sich einfach dadurch vornehmen, dass die Anzahl der gebildeten Identifikations-Eigenschaftpaare daraufhin überprüft wird, ob sie der Bedingung $2^n$ entspricht, für alle n $\mu$ 1. Für das Objekt 02 mit vier Klassen (= $2^2$) und das Objekt 3 mit zwei Klassen (= $2^1$) ist diese Bedingung erfüllt. Lediglich das Objekt O1 mit nur einem Identifikations-Eigenschaftpaar erfüllt diese Bedingung nicht.

Falls die vorgenannte Bedingung nicht erfüllt wird, so kann durch Ergänzen der vorhandenen Identifikations-Eigenschaftpaare durch beliebige Identifikations-Eigenschaftpaare aus der Menge der vorhandenen Identifikations-Eigenschaftpaare für das entsprechende Objekt eine vorläufige Sammlung von Identifikations-Eigenschaftpaaren gebildet werden. Dazu werden also beliebige bereits vorhandene Identifikations-Eigenschaftpaare vervielfacht, bis die erforderliche Gesamtanzahl der Identifikations-Eigenschaftpaare den nächsten Wert von $2^n$ ergibt. Im vorliegenden Fall wäre somit für das Objekt O1 das vorhandene Identifikations-Eigenschaftpaar RR zu verdoppeln, wodurch eine Sammlung von Identifikations-Eigenschaftpaaren für das Objekt O1 erzielt wird, die mit RR, RR zwei Identifikations-Eigenschaftpaare (= $2^1$) enthält und damit die genannte Bedingung erfüllt.

Für die einzelnen Objekte gelten somit die folgenden Sammlungen von Identifikations-Eigenschaftpaaren:

| | | | |
|---|---|---|---|
| Objekt O1: | RR, RR | -> | Eltern-Generation (F0) |
| Objekt O2: | RR, RB, RG und BG | -> | Kinder-Generation (F1) |
| Objekt O3: | RR, RG | -> | Eltern-Generation (F0) |

Dies ist in Fig. 14 dargestellt.

Das Objekt O1 entspricht somit dem Phänotyp 1 der F0-Generation, das Objekt 02 entspricht dem Phänotyp 12 der F1-Generation und das Objekt 03 entspricht dem Phänotyp 2 der F0-Generation.

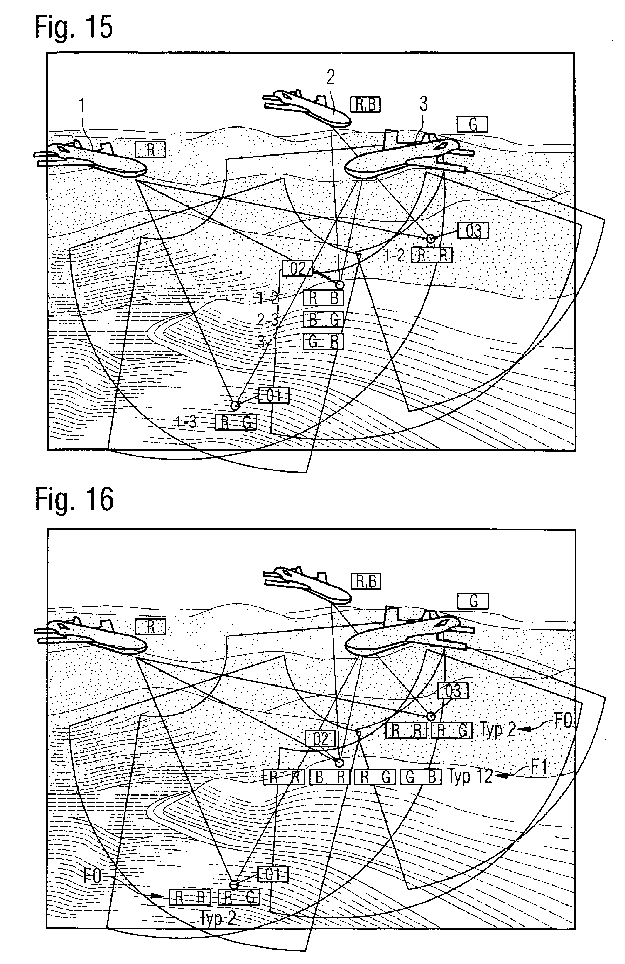

Zu einem späteren Zeitpunkt wird eine neue Betrachtung des Bereichs mittels der Flugkörper 1, 2 und 3 durchgeführt (Fig. 15). Der Sensor R des Flugkörpers 1 erfasst nunmehr die Objekte O1 02 und 03. Der Sensor B des Flugkörpers 2 erfasst nun das Objekt 02 und der Sensor R des Flugkörpers 2 erfasst das Objekt 03. Der Sensor G des Flugkörpers 3 erfasst die Objekte O1 und 02. Durch paarweises Kombinieren der Sensoreigenschaften, auf die die einzelnen Objekte angesprochen haben, werden für diese aktuelle Betrachtung die folgenden vorläufigen Identifikations-Eigenschaftpaare gebildet:

Objekt O1:     RG
Objekt O2:     RB, BG, GR
Objekt O3:     RR

Betrachtet man das in Fig. 14 dargestellte und um Dubletten bereinigte Aufklärungsergebnis der ersten Betrachtung und das Ergebnis der in Fig. 15 dargestellten zweiten Betrachtung, so sieht man, dass sich in beiden Betrachtungen die beobachteten Identifikations-Eigenschaften der einzelnen Objekte O1 02 und 03 voneinander unterscheiden. Beispielsweise weiß der Beobachter aufgrund der isolierten Betrachtung der beiden Aufklärungsergebnisse nicht, ob er das Objekt O1 nun aufgrund der Eigenschaften RR oder der Eigenschaften RG identifizieren soll.

Hier liefert das Verfahren der vorliegenden Erfindung die weitere technische Lehre, nicht nur die durch mehrere Sensoren gewonnenen Erkenntnisse über das Objekt miteinander zu verknüpfen, sondern auch die Erkenntnisse aus zu unterschiedlichen Zeitpunkten durchgeführten Betrachtungen miteinander zu verknüpfen, das heißt, die bereits in früheren Betrachtungen gewonnenen Erkenntnisse über das Objekt auf eine später durchgeführte Betrachtung desselben Objekts zu vererben. Dies ist in Fig. 16 dargestellt.

Das Objekt O1 vererbt daher die bei der ersten Betrachtung (Fig. 14) gewonnenen Identifikations-Eigenschaftpaare RR, RR an das Ergebnis (RG) der zweiten Betrachtung (Fig. 15), so dass dem Objekt O1 nach dem Herauskürzen des doppelten Identifikations-Eigenschaftpaars RR nunmehr die Identifikations-Eigenschaftpaare RR und RG zugeordnet sind. Diese Gesamtheit der Identifikations-Eigenschaftpaare des Objekts O1 entspricht dem Alleltyp 2 der Eltern-Generation F0.

Bezüglich des zweiten Objekts 02 werden die aus der ersten Betrachtung (Fig. 14) gewonnenen Identifikations-Eigenschaftpaare RR, RB, RG und BG mit den in der zweiten Betrachtung (Fig. 14) gewonnenen Identifikations-Eigenschaftpaaren RB, RG und BG fusioniert, woraus sich für das Objekt 02 eine Gesamtheit der Identifikations-Eigenschaftpaare von RR, BR, RG und GB ergibt (BG = GB). Diese unveränderte Gesamtheit entspricht weiterhin dem Alleltyp 12 der Kind-Generation F1.

Die aus der ersten Betrachtung (Fig. 13) für das Objekt 03 gewonnenen Identifikations-Eigenschaftpaare RR, RG werden mit dem in der zweiten Betrachtung (Fig. 15) gewonnenen Identifikations-Eigenschaftpaar RR fusioniert und ergeben nach dem Herauskürzen des doppelten Identifikations-Eigenschaftpaars RR die Gesamtheit der Identifikations-Eigenschaftpaare von RR, RG. Dies entspricht weiterhin dem Alleltyp 2 der Eltern-Generation F0.

Durch die im zweiten Beobachtungsschritt (Fig. 15) erhaltene Information und die Fusion dieser Information mittels der aus dem ersten Beobachtungs-Schritt (Fig. 13) abgeleiteten Objektinformation wurden zwar für die Objekte 02 und 03 keine neuen Erkenntnisse gewonnen, aber der Phänotyp des Objekts O1 hat durch die Fusion der Daten aus der ersten Beobachtung und aus der zweiten Beobachtung gewechselt, wodurch eine Präzisierung der Erkenntnis über das erste Objekt O1 gewonnen werden konnte.

Es ist nachvollziehbar, dass durch weitere Beobachtungen neue Erkenntnisse über die einzelnen Objekte gewonnen werden können und dass durch die Datenfusion gemäß des erfindungsgemäßen Verfahrens die bereits vorhandenen Erkenntnisse über die einzelnen Objekte mit neuen Erkenntnissen verknüpft werden können, woraus sich dann für die einzelnen Objekte jeweils eine Sammlung von Identifikations-Eigenschaften ergibt, die zu höheren Vererbungsklassen führen kann, so dass der Erkenntnisgewinn über die einzelnen Objekteigenschaften steigt. Diese Steigerung kann, wie im Beispiel, durch eine Mehrzahl von zeitlich aufeinander folgenden Betrachtungen oder aber durch eine Erhöhung der Anzahl der Sensoren beziehungsweise der Anzahl der mit Sensoren ausgestatteten beobachtenden Flugkörper erreicht werden. Zudem lassen sich beide vorgenannten Alternativen auch kombinieren, so dass sowohl die Anzahl der Sensoren, als auch die Anzahl der Beobachtungen erhöht werden kann.

Die auf diese Weise für die einzelnen Objekte erhaltenen Sammlungen von Identifikations-Eigenschaftspaaren werden anschließend mit in einer Objektdatenbank abgespeicherten Objekt-Eigenschaftsklassen verglichen, so dass über diesen Vergleich eine Identifikation der Objekte erfolgen kann. Je größer dabei die über ein Objekt gewonnene Information ist, also je höher dessen Generationsziffer ist, um so sicherer und zutreffender wird die Objekt-Identifikation sein. Für das gezeigte Beispiel gilt somit, dass die Identifikation des Objekts 02 über die Kindgeneration F1 eine höhere Identifikationssicherheit liefert, als die Identifikation der Objekte O1 oder 03, die lediglich der Eltern-Generation F0 zugeordnet worden sind.

Die dieser Erfindung zugrunde liegende genetische Klassifikation von Merkmalen erlaubt eine erheblich feinere Unterscheidung als die klassische, weil sie sowohl die Allelverhältnisse, als auch die Phänotypenkonfiguration (heterozygot, homozygot oder beide) berücksichtigt. Abzüglich der äquivalenten Klassen ist die Zahl der verbleibenden Unterscheidungsmöglichkeiten immer noch deutlich größer als bei einer einfachen klassischen Klassifizierung. Dieses Verhältnis steigt mit der Zahl der Merkmale sehr stark zugunsten des erfindungsgemäßen Verfahrens an. Bei zwei Merkmalen sind es drei Phänotypen, aber 16 Alleltypen (Verhältnis 16:3=5.3), bei drei Merkmalen sind es sechs Phänotypen, aber 81 Alleltypen (Verhältnis 81:6=13.5). In dieser höheren Ausbeute von Unterschieden liegt ein erheblicher Vorteil des erfindungsgemäßen Verfahrens. Nicht jeder Unterschied ist äußerlich sichtbar, aber immanent dennoch vorhanden. Abzüglich der nicht unterscheidbaren äquivalenten Allelklassen stehen bei zwei Merkmalen drei Phänotypen, aber sechs Allelklassen (Verhältnis 6:3=2.0) und bei drei Merkmalen sechs Phänotypen, aber 21 Allelklassen (Verhältnis 21:6=3.5) zur Objektidentifikation zur Verfügung.

Die Verwendung von Alleltypen zur Unterscheidung erlaubt bei $m$ Allelen (Ausprägungen der Objekteigenschaft) eine Klassifizierung mit einer $m^4$-Gesetzmäßigkeit. Zur Klassifizierung mit Hilfe von Allelklassen wäre die in der rechten Spalte der Fig. 6 wiedergegebene Formel zu verwenden, wobei in Fig. 6 der für ,,Allelklassen" der synonyme Begriff ,,Mendelklassen" verwendet worden ist. In vereinfachter Weise kann für diese Klassifizierung auch die folgende Formel verwendet werden:

$$\frac{\left(m^2 + m\right)}{4}\left[\frac{\left(m^2 + m\right)}{2} + 1\right]$$

Im Gegensatz dazu geht die Phänotypenklassifizierung mit einer schwächeren Abhängigkeit einher, nämlich $(m^2 + m)$/2. Dies wäre die einfachste Art der klassischen Klassifizierung, die jedoch durch erfindungsgemäße Klassifizierung nach Allelklassentypen in ihrer Wirksamkeit zur Objekterkennung bei weitem übertroffen wird. Die nachstehende Tabelle zeigt in einer Gegenüberstellung, um wieviel genauer eine erfindungsgemäße Objekterkennung auf der Basis der Allelklassen als Objekt-Eigenschaftsklassen beziehungsweise als Identifikations-Eigenschaftsklassen gegenüber der klassischen Objekterkennung nach Phänotypenklassen durchgeführt werden kann.

| Anzahl m der Merkmale (Allele) | Phänotypenklassen (klassisch) | Allelklassen | Alleltypen |
|---|---|---|---|
| 2 | 3 | 6 | 16 |
| 3 | 6 | 21 | 81 |
| 4 | 10 | 55 | 256 |
| 5 | 15 | 120 | 625 |
| 6 | 21 | 231 | 1296 |

(fortgesetzt)

| Anzahl m der Merkmale (Allele) | Phänotypenklassen (klassisch) | Allelklassen | Alleltypen |
|---|---|---|---|
| 7 | 28 | 406 | 2401 |
| 8 | 36 | 666 | 4096 |
| 9 | 45 | 1035 | 6561 |
| 10 | 55 | 1540 | 10000 |
| 11 | 66 | 2211 | 14641 |
| 12 | 78 | 3081 | 20736 |
| 13 | 91 | 4186 | 28561 |
| 14 | 105 | 5565 | 38416 |
| 15 | 120 | 7260 | 50625 |
| 16 | 136 | 9316 | 65536 |

Entfernt man die Dubletten aus der Anzahl der Alleltypen, wobei die Reihenfolge der Merkmale (= Eigenschaften) unberücksichtigt bleibt (zum Beispiel ,,RG" = ,,GR") so erhält man die Werte in der Spalte "Allelklassen".

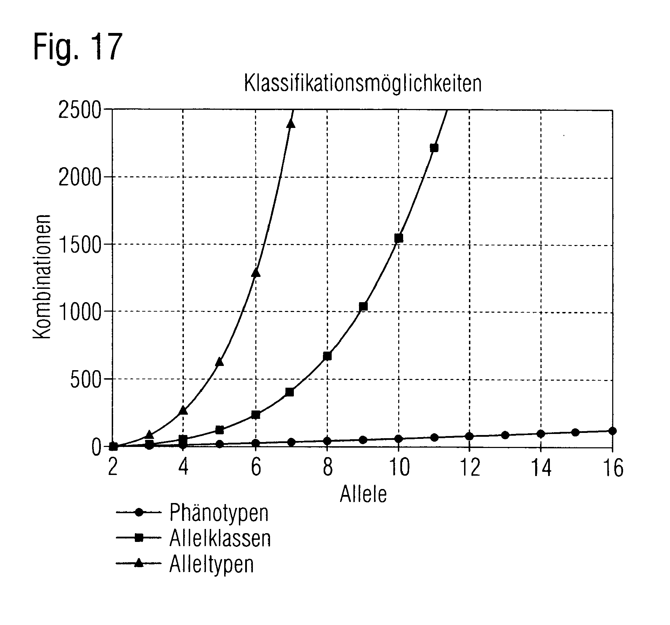

Der Zusammenhang zwischen der Anzahl der Phänotypenklassen (klassische Objekterkennung), der Anzahl der Allelklassen und der Anzahl der Alleltypen bei jeweils m Merkmalen oder Allelen aus der vorstehenden Tabelle ist als graphische Funktion in Fig. 17 wiedergegeben.

Bezugszeichen in den Ansprüchen, der Beschreibung und den Zeichnungen dienen lediglich dem besseren Verständnis der Erfindung und sollen den Schutzumfang nicht einschränken.

**Patentansprüche**

1. Verfahren zur Objekterkennung, wobei das Objekt (O1; 02; 03) eine Mehrzahl von Ausprägungen (r', g', b', ...) abstrakter Objekteigenschaften (r, g, b, ...) aufweist und einer Objekt-Eigenschaftsklasse ($K_1$, $K_2$, $K_3$, ...) eines hierarchischen Systems von in einem ersten Speicher gespeicherten Objekt-Eigenschaftsklassen zugeordnet ist, mit den Schritten:

   1.1 Betrachten zumindest eines Ortes, an dem das Objekt (O1; 02; 03) vermutet wird, mittels einer Mehrzahl von eine Sensorgemeinschaft (R, G, B, ...) aufweisenden Sensoren die jeweils auf zumindest eine Objekteigenschaft (r, g, b, ...) ansprechen und daraufhin ein Sensorsignal ($S_R$, $S_G$, $S_B$, ...) abgeben;

   1.2 Prüfen, ob die abgegebenen Sensorsignale ($S_R$, $S_G$, $S_B$, ...) jeweils einen für sie vorgegebenen Schwellenwert überschreiten und Akzeptieren jener Sensorsignale ($S_R$, $S_G$, $S_B$, ...), die den Schwellenwert überschreiten;

   1.3 Paarweises Kombinieren der Sensoreigenschaften (R, G, B, ...) für die im Schritt 1.2 akzeptierte Sensorsignale ($S_R$, $S_G$, $S_B$, ...) erhalten worden sind, zu Identifikations-Eigenschaftspaaren (RG; RB; GB; ...);

   1.4 Vergleichen der im Schritt 1.3 erhaltenen Gesamtheit der Identifikations-Eigenschaftspaare (RG; RB; GB; ...) mit den im ersten Speicher gespeicherten Objekt-Eigenschaftsklassen ($K_1$, $K_2$, $K_3$, ... );

   1.5 Bestimmung des Objekts anhand der Objekt-Eigenschaftsklasse, deren Objekt-Eigenschaftspaare (rg; rb; gb; ...) identisch mit den in Schritt 1.3 erhaltenen Identifikations-Eigenschaftspaaren (RG; RB; GB; ...) sind.

2. Verfahren nach Anspruch 1,
   **dadurch gekennzeichnet,**
   **dass** der Schritt 1.3 nach den Regeln der Mendelschen Vererbungslehre durchgeführt wird, wobei im Schritt 1.3 die Anzahl der Identifikations-Eigenschaftspaare einer jeden Sammlung einem Wert von $2^n$ mit n $\mu$ 1 entspricht und wobei zum Erzielen dieser Bedingung zunächst Dubletten mehrfach ermittelter Identifikations-Eigenschaftspaare weggelassen werden und wobei dann, falls **dadurch** die Bedingung noch nicht erfüllt werden konnte, bereits vorhandene Identifikations-Eigenschaftspaare vervielfacht werden bis die Bedingung erfüllt ist.

3. Verfahren nach Anspruch 1 oder 2,
   **dadurch gekennzeichnet,**
   **dass** die Betrachtung des zumindest einen Ortes im Schritt 1.1 durch Scannen eines Bereichs erfolgt, in welchem das Objekt (O1; 02; 03) vermutet wird.

4. Verfahren nach Anspruch 3,

**dadurch gekennzeichnet,**

**dass** nach dem Schritt 1.2 die folgenden Schritte durchgeführt werden:

1.2.1 Erfassen von Ortskoordinaten zu jedem akzeptierten Sensorsignal ($S_R$, $S_G$, $S_B$, ...),

1.2.2 Zuordnen der Ortskoordinaten zum akzeptierten Sensorsignal ($S_R$, $S_G$, $S_B$, ...) und

1.2.3 Speichern der akzeptierten Sensorsignale ($S_R$, $S_G$, $S_B$, ...) mit den zugeordneten Ortskoordinaten in einem zweiten Datenspeicher.

5. Verfahren nach einem der vorhergehenden Ansprüche,
**dadurch gekennzeichnet,**
**dass** jedem akzeptierten Sensorsignal ($S_R$, $S_G$, $S_B$, ...) ein Zeitsignal zugeordnet wird, das den Zeitpunkt der Erfassung des Sensorsignals wiedergibt, und das die akzeptierten Sensorsignale ($S_R$, $S_G$, $S_B$, ...) mit dem jeweils zugeordneten Zeitsignal im zweiten Datenspeicher gespeichert werden.

6. Verfahren nach einem der vorhergehenden Ansprüche,
**dadurch gekennzeichnet,**
**dass** in der Mehrzahl von Sensoren zumindest ein Sensor (R') vorgesehen ist, der zusätzlich zu einem bereits vorhandenen Sensor (R) auf zumindest eine Objekteigenschaft (r) anspricht und dass dieser zusätzliche Sensor ein Sensorsignal ($S_R$') abgibt, das ebenfalls für die weitere Bearbeitung nur akzeptiert wird, wenn es einen vorgegebenen Schwellenwert überschreitet.

7. Verfahren nach einem der vorhergehenden Ansprüche,
**dadurch gekennzeichnet,**

- **dass** die Betrachtung des zumindest einen Ortes im Schritt 1.1 durch unterschiedliche Sensoren (R, G, B, ...) von zumindest einem Teil der Sensoren (R, G, B, ...) zu unterschiedlichen Zeitpunkten erfolgt und
- **dass** die Schritte 1.3 und 1.4 durchgeführt werden, wenn die Betrachtung des Ortes durch alle Sensoren (R, G, B, ...) erfolgt ist.

8. Verfahren nach einem der vorhergehenden Ansprüche,
**dadurch gekennzeichnet,**

- **dass** die Betrachtung des Ortes im Schritt 1.1 durch unterschiedliche Sensoren (R, G, B, ...) von zumindest einem Teil der Sensoren (R, G, B, ...) mehrmals nacheinander durchgeführt wird;
- **dass** der Schritt 1.3 für die Gesamtheit der durchgeführten Betrachtungen durchlaufen wird und
- **dass** die aus der Gesamtheit der durchgeführten Betrachtungen ermittelten Identifikations-Eigenschaftspaare (RG; RB; GB; ...) gemäß den Regeln der Mendelschen Vererbungslehre zu einer Sammlung von Identifikations-Eigenschaftspaaren zusammengefasst werden, wobei die Anzahl der Identifikations-Eigenschaftspaare einer jeden Sammlung einem Wert von $2^n$ mit n $\mu$ 1 entspricht und wobei zum Erzielen dieser Bedingung zunächst beim Zusammenfassen der ermittelten Identifikations-Eigenschaftspaare mehrfach ermittelte Identifikations-Eigenschaftspaare nur einmal in die Sammlung übernommen werden und wobei dann, falls **dadurch** die Bedingung noch nicht erfüllt werden konnte, bereits vorhandene Identifikations-Eigenschaftspaare vervielfacht werden bis diese Bedingung erfüllt ist und
- **dass** im Schritt 1.4 die in der Sammlung zusammengefassten Identifikations-Eigenschaftspaare mit den gespeicherten Objekt-Eigenschaftspaaren verglichen werden.

9. Verfahren nach einem der vorhergehenden Ansprüche,
**dadurch gekennzeichnet,**
**dass** beim Kombinieren der Sensoreigenschaften im Schritt 1.3 Dubletten mehrfach vorhandener Identifikations-Eigenschaftspaare nicht berücksichtigt werden, wobei die Reihenfolge der Identifikations-Eigenschaften in einem Identifikations-Eigenschaftspaar unberücksichtigt bleibt (RG = GR).

10. Verfahren nach einem der vorhergehenden Ansprüche,
**dadurch gekennzeichnet,**
**dass** die hierarchischen Objekt-Eigenschaftsklassen ($K_1$, $K_2$, $K_3$, ...) durch Klassifizierung der aus den Objekteigenschaften (r, g, b, ...) gebildeten Objekt-Eigenschaftspaare (rg; rb; gb; ...) gebildet werden.

11. Verfahren nach Anspruch 10,

**dadurch gekennzeichnet,**
**dass** die Anzahl der Objekt-Eigenschaftspaare einer Objekt-Eigenschaftsklasse einem Wert von $2^n$ mit $n \geq 1$ entspricht, wobei zum Erzielen dieser Bedingung zunächst bei der Klassifizierung der Objekt-Eigenschaftspaare Dubletten mehrfach vorhandener Objekt-Eigenschaftspaare nicht berücksichtigt werden, wobei die Reihenfolge der Objekteigenschaften in einem Objekt-Eigenschaftspaar unberücksichtigt bleibt (rg = gr), und wobei dann, falls dadurch die Bedingung noch nicht erfüllt werden konnte, bereits vorhandene Objekt-Eigenschaftspaare vervielfacht werden bis die Bedingung erfüllt ist.

Fig. 1

$e_{2211}$

Fig. 2

$e_{1234}$

# Fig. 3

# Fig. 4

|  | Klasse | S:W | ss | sw | ww |  |
|---|---|---|---|---|---|---|
| homozygot | 1 | 4:0 | 4 | 0 | 0 | eine Farbe |
|  | 6 | 0:4 | 0 | 0 | 4 | |
| heterozygot | 4 | 2:2 | 0 | 4 | 0 | |
| homozygot + heterozygot | 2 | 3:1 | 2 | 2 | 0 | zwei Farben |
|  | 3 | 2:2 | 1 | 2 | 1 | |
|  | 5 | 1:3 | 0 | 2 | 2 | |

## Fig. 5

| | Klasse | R:G:B | rr | rg | gg | gb | bb | br | |
|---|---|---|---|---|---|---|---|---|---|
| homo-zygot | 1 | 4:0:0 | 4 | 0 | 0 | 0 | 0 | 0 | eine Farbe |
| homo-zygot | 11 | 0:4:0 | 0 | 0 | 4 | 0 | 0 | 0 | eine Farbe |
| homo-zygot | 21 | 0:0:4 | 0 | 0 | 0 | 0 | 4 | 0 | eine Farbe |
| hetero- + homo-zygot | 2 | 3:1:0 | 2 | 2 | 0 | 0 | 0 | 0 | zwei Farben |
| hetero- + homo-zygot | 3 | 3:0:1 | 2 | 0 | 0 | 0 | 0 | 2 | zwei Farben |
| hetero- + homo-zygot | 4 | 1:3:0 | 0 | 2 | 2 | 0 | 0 | 0 | zwei Farben |
| hetero- + homo-zygot | 5 | 0:3:1 | 0 | 0 | 2 | 2 | 0 | 0 | zwei Farben |
| hetero- + homo-zygot | 6 | 1:0:3 | 0 | 0 | 0 | 0 | 2 | 2 | zwei Farben |
| hetero- + homo-zygot | 7 | 0:1:3 | 0 | 0 | 0 | 2 | 2 | 0 | zwei Farben |
| hetero- + homo-zygot | 8 | 2:2:0 | 1 | 2 | 1 | 0 | 0 | 0 | zwei Farben |
| hetero- + homo-zygot | 9 | 2:0:2 | 1 | 0 | 0 | 0 | 1 | 2 | zwei Farben |
| hetero- + homo-zygot | 10 | 0:2:2 | 0 | 0 | 1 | 2 | 1 | 0 | zwei Farben |
| hetero-zygot | 12 | 2:2:0 | 0 | 4 | 0 | 0 | 0 | 0 | zwei Farben |
| hetero-zygot | 13 | 2:0:2 | 0 | 0 | 0 | 0 | 0 | 4 | zwei Farben |
| hetero-zygot | 14 | 0:2:2 | 0 | 0 | 0 | 4 | 0 | 0 | zwei Farben |
| hetero- + homo-zygot | 15 | 2:1:1 | 1 | 1 | 0 | 1 | 0 | 1 | drei Farben |
| hetero- + homo-zygot | 16 | 1:2:1 | 0 | 1 | 1 | 1 | 0 | 1 | drei Farben |
| hetero- + homo-zygot | 17 | 1:1:2 | 0 | 1 | 0 | 1 | 1 | 1 | drei Farben |
| hetero-zygot | 18 | 2:1:1 | 0 | 2 | 0 | 0 | 0 | 2 | drei Farben |
| hetero-zygot | 19 | 1:2:1 | 0 | 2 | 0 | 2 | 0 | 0 | drei Farben |
| hetero-zygot | 20 | 1:1:2 | 0 | 0 | 0 | 2 | 0 | 2 | drei Farben |

## Fig. 6

| Genotypen | Homozygote | Heterozygote | Phänotypen | Elternpaare | Mendelklassen |
|---|---|---|---|---|---|
| 4 | 2 | 1 | 3 | 16 | 6 |
| 9 | 3 | 3 | 6 | 81 | 21 |
| 16 | 4 | 6 | 10 | 256 | 55 |
| $\vdots$ | $\vdots$ | $\vdots$ | $\vdots$ | $\vdots$ | $\vdots$ |
| $m^2$ | $m$ | $(m^2 - m)/2$ | $(m^2 + m)/2$ | $m^4$ | $\sum_{i=0}^{m-1}\left(\dfrac{m^2 + m}{2} - i\right)$ |

# Fig. 7

| $F_n$ | $T_{1,ss}^{(n)}$ | $T_{1,sw}^{(n)}$ | $T_{1,ww}^{(n)}$ | $T_1^{(n)}$ | $T_{2,ss}^{(n)}$ | $T_{2,sw}^{(n)}$ | $T_{2,ww}^{(n)}$ | $T_2^{(n)}$ |
|---|---|---|---|---|---|---|---|---|
| F1 | 4 | 0 | 0 | 4 | 2 | 2 | 0 | 4 |
| F2 | 24 | 0 | 0 | 24 | 13 | 10 | 1 | 24 |
| F3 | 144 | 0 | 0 | 144 | 81 | 54 | 9 | 144 |
| F4 | 864 | 0 | 0 | 864 | 507 | 282 | 75 | 864 |
| F5 | 5184 | 0 | 0 | 5184 | 3141 | 1494 | 549 | 5184 |
| F6 | 31104 | 0 | 0 | 31104 | 19395 | 7866 | 3843 | 31104 |
| F7 | 186624 | 0 | 0 | 186624 | 119205 | 41526 | 25893 | 186624 |
| F8 | 1119744 | 0 | 0 | 1119744 | 730323 | 218970 | 170451 | 1119744 |
| F9 | 6718464 | 0 | 0 | 6718464 | 4461237 | 1155222 | 1102005 | 6718464 |

| $F_n$ | $T_{7,ss}^{(n)}$ | $T_{7,sw}^{(n)}$ | $T_{7,ww}^{(n)}$ | $T_7^{(n)}$ | $T_{6,ss}^{(n)}$ | $T_{6,sw}^{(n)}$ | $T_{6,ww}^{(n)}$ | $T_6^{(n)}$ |
|---|---|---|---|---|---|---|---|---|
| F1 | 1 | 2 | 1 | 4 | 0 | 4 | 0 | 4 |
| F2 | 5 | 14 | 5 | 24 | 6 | 12 | 6 | 24 |
| F3 | 39 | 66 | 39 | 144 | 30 | 84 | 30 | 144 |
| F4 | 249 | 366 | 249 | 864 | 234 | 396 | 234 | 864 |
| F5 | 1647 | 1890 | 1647 | 5184 | 1494 | 2196 | 1494 | 5184 |
| F6 | 10521 | 10062 | 10521 | 31104 | 9882 | 11340 | 9882 | 31104 |
| F7 | 66879 | 52866 | 66879 | 186624 | 63126 | 60372 | 63126 | 186624 |
| F8 | 420201 | 279342 | 420201 | 1119744 | 401274 | 317196 | 401274 | 1119744 |
| F9 | 2623023 | 1472418 | 2623023 | 6718464 | 2521206 | 1676052 | 2521206 | 6718464 |

| $F_n$ | $T_{12,ss}^{(n)}$ | $T_{12,sw}^{(n)}$ | $T_{12,ww}^{(n)}$ | $T_{12}^{(n)}$ | $T_{16,ss}^{(n)}$ | $T_{16,sw}^{(n)}$ | $T_{16,ww}^{(n)}$ | $T_{16}^{(n)}$ |
|---|---|---|---|---|---|---|---|---|
| F1 | 0 | 2 | 2 | 4 | 0 | 0 | 4 | 4 |
| F2 | 1 | 10 | 13 | 24 | 0 | 0 | 24 | 24 |
| F3 | 9 | 54 | 81 | 144 | 0 | 0 | 144 | 144 |
| F4 | 75 | 282 | 507 | 864 | 0 | 0 | 864 | 864 |
| F5 | 549 | 1494 | 3141 | 5184 | 0 | 0 | 5184 | 5184 |
| F6 | 3843 | 7866 | 19395 | 31104 | 0 | 0 | 31104 | 31104 |
| F7 | 25893 | 41526 | 119205 | 186624 | 0 | 0 | 186624 | 186624 |
| F8 | 170451 | 218970 | 730323 | 1119744 | 0 | 0 | 1119744 | 1119744 |
| F9 | 1102005 | 1155222 | 4461237 | 6718464 | 0 | 0 | 6718464 | 6718464 |

# Fig. 8

| $F_n$ | $P_1$ | $H_1$ | $Q_1$ | $p$ | $q$ | $P_2$ | $H_2$ | $Q_2$ | $p$ | $q$ |
|---|---|---|---|---|---|---|---|---|---|---|
| F1 | 1 | 0 | 0 | 1 | 0 | 0,5 | 0,5 | 0 | 0,75 | 0,25 |
| F2 | 1 | 0 | 0 | 1 | 0 | 0,542 | 0,416 | 0,042 | 0,75 | 0,25 |
| F3 | 1 | 0 | 0 | 1 | 0 | 0,563 | 0,374 | 0,063 | 0,75 | 0,25 |
| F4 | 1 | 0 | 0 | 1 | 0 | 0,587 | 0,326 | 0,087 | 0,75 | 0,25 |
| F5 | 1 | 0 | 0 | 1 | 0 | 0,606 | 0,288 | 0,106 | 0,75 | 0,25 |
| F6 | 1 | 0 | 0 | 1 | 0 | 0,624 | 0,252 | 0,124 | 0,75 | 0,25 |
| F7 | 1 | 0 | 0 | 1 | 0 | 0,639 | 0,222 | 0,139 | 0,75 | 0,25 |
| F8 | 1 | 0 | 0 | 1 | 0 | 0,652 | 0,196 | 0,152 | 0,75 | 0,25 |
| F9 | 1 | 0 | 0 | 1 | 0 | 0,664 | 0,172 | 0,164 | 0,75 | 0,25 |

| $F_n$ | $P_7$ | $H_7$ | $Q_7$ | $p$ | $q$ | $P_6$ | $H_6$ | $Q_6$ | $p$ | $q$ |
|---|---|---|---|---|---|---|---|---|---|---|
| F1 | 0,25 | 0,5 | 0,25 | 0,5 | 0,5 | 0 | 1 | 0 | 0,5 | 0,5 |
| F2 | 0,208 | 0,584 | 0,208 | 0,5 | 0,5 | 0,25 | 0,5 | 0,25 | 0,5 | 0,5 |
| F3 | 0,271 | 0,458 | 0,271 | 0,5 | 0,5 | 0,208 | 0,584 | 0,208 | 0,5 | 0,5 |
| F4 | 0,288 | 0,424 | 0,288 | 0,5 | 0,5 | 0,271 | 0,458 | 0,271 | 0,5 | 0,5 |
| F5 | 0,318 | 0,364 | 0,318 | 0,5 | 0,5 | 0,288 | 0,424 | 0,288 | 0,5 | 0,5 |
| F6 | 0,338 | 0,324 | 0,338 | 0,5 | 0,5 | 0,318 | 0,364 | 0,318 | 0,5 | 0,5 |
| F7 | 0,358 | 0,284 | 0,358 | 0,5 | 0,5 | 0,338 | 0,324 | 0,338 | 0,5 | 0,5 |
| F8 | 0,375 | 0,250 | 0,375 | 0,5 | 0,5 | 0,358 | 0,284 | 0,358 | 0,5 | 0,5 |
| F9 | 0,390 | 0,220 | 0,390 | 0,5 | 0,5 | 0,375 | 0,250 | 0,375 | 0,5 | 0,5 |

| $F_n$ | $P_{12}$ | $H_{12}$ | $Q_{12}$ | $p$ | $q$ | $P_{16}$ | $H_{16}$ | $Q_{16}$ | $p$ | $q$ |
|---|---|---|---|---|---|---|---|---|---|---|
| F1 | 0 | 0,5 | 0,5 | 0,25 | 0,75 | 0 | 0 | 1 | 0 | 1 |
| F2 | 0,042 | 0,416 | 0,542 | 0,25 | 0,75 | 0 | 0 | 1 | 0 | 1 |
| F3 | 0,063 | 0,374 | 0,563 | 0,25 | 0,75 | 0 | 0 | 1 | 0 | 1 |
| F4 | 0,087 | 0,326 | 0,587 | 0,25 | 0,75 | 0 | 0 | 1 | 0 | 1 |
| F5 | 0,106 | 0,288 | 0,606 | 0,25 | 0,75 | 0 | 0 | 1 | 0 | 1 |
| F6 | 0,124 | 0,252 | 0,624 | 0,25 | 0,75 | 0 | 0 | 1 | 0 | 1 |
| F7 | 0,139 | 0,222 | 0,639 | 0,25 | 0,75 | 0 | 0 | 1 | 0 | 1 |
| F8 | 0,152 | 0,196 | 0,652 | 0,25 | 0,75 | 0 | 0 | 1 | 0 | 1 |
| F9 | 0,164 | 0,172 | 0,664 | 0,25 | 0,75 | 0 | 0 | 1 | 0 | 1 |

# Fig. 9

| $k$ | $T_{k,ss}^{(1)}$ | $T_{k,sw}^{(1)}$ | $T_{k,ww}^{(1)}$ | $P$ | $H$ | $Q$ | $p$ | $q$ |
|---|---|---|---|---|---|---|---|---|
| 1 | 4 | 0 | 0 | 1 | 0 | 0 | 1 | 0 |
| 2-5 | 2 | 2 | 0 | 0,5 | 0,5 | 0 | 0,75 | 0,25 |
| 6 | 0 | 4 | 0 | 0 | 1 | 0 | 0,5 | 0,5 |
| 7-10 | 1 | 2 | 1 | 0,25 | 0,5 | 0,25 | 0,5 | 0,5 |
| 11 | 0 | 4 | 0 | 0 | 1 | 0 | 0,5 | 0,5 |
| 12-15 | 0 | 2 | 2 | 0 | 0,5 | 0,5 | 0,25 | 0,75 |
| 16 | 0 | 0 | 4 | 0 | 0 | 1 | 0 | 1 |
| $k$ | $T_{k,ss}^{(2)}$ | $T_{k,sw}^{(2)}$ | $T_{k,ww}^{(2)}$ | $P$ | $H$ | $Q$ | $p$ | $q$ |
| 1 | 24 | 0 | 0 | 1 | 0 | 0 | 1 | 0 |
| 2-5 | 13 | 10 | 1 | 0,542 | 0,417 | 0,042 | 0,75 | 0,25 |
| 6 | 6 | 12 | 6 | 0,25 | 0,5 | 0,25 | 0,5 | 0,5 |
| 7-10 | 5 | 14 | 5 | 0,208 | 0,584 | 0,208 | 0,5 | 0,5 |
| 11 | 6 | 12 | 6 | 0,25 | 0,5 | 0,25 | 0,5 | 0,5 |
| 12-15 | 1 | 10 | 13 | 0,042 | 0,417 | 0,542 | 0,25 | 0,75 |
| 16 | 0 | 0 | 24 | 0 | 0 | 1 | 0 | 1 |
| $k$ | $T_{k,ss}^{(3)}$ | $T_{k,sw}^{(3)}$ | $T_{k,ww}^{(3)}$ | $P$ | $H$ | $Q$ | $p$ | $q$ |
| 1 | 144 | 0 | 0 | 1 | 0 | 0 | 1 | 0 |
| 2-5 | 81 | 54 | 9 | 0,562 | 0,375 | 0,063 | 0,75 | 0,25 |
| 6 | 30 | 84 | 30 | 0,208 | 0,584 | 0,208 | 0,5 | 0,5 |
| 7-10 | 39 | 66 | 39 | 0,271 | 0,458 | 0,271 | 0,5 | 0,5 |
| 11 | 30 | 84 | 30 | 0,208 | 0,584 | 0,208 | 0,5 | 0,5 |
| 12-15 | 9 | 54 | 81 | 0,063 | 0,375 | 0,562 | 0,25 | 0,75 |
| 16 | 0 | 0 | 144 | 0 | 0 | 1 | 0 | 1 |

Fig. 10

| $A$ | $B$ | $A \vee B$ | $A \wedge B$ | $A \rightarrow B$ | $A$ | $B$ | $A \vee B$ | $A \wedge B$ | $A \rightarrow B$ |
|---|---|---|---|---|---|---|---|---|---|
| 1 | 1 | 1 | 1 | 1 | 0,5 | 0,25 | 0,5 | 0,25 | 0,25 |
| 1 | 0,75 | 1 | 0,75 | 0,75 | 0,5 | 0 | 0,5 | 0 | 0 |
| 1 | 0,5 | 1 | 0,5 | 0,5 | 0,25 | 1 | 1 | 0,25 | 1 |
| 1 | 0,25 | 1 | 0,25 | 0,25 | 0,25 | 0,75 | 0,75 | 0,25 | 1 |
| 1 | 0 | 1 | 0 | 0 | 0,25 | 0,5 | 0,5 | 0,25 | 1 |
| 0,75 | 1 | 1 | 0,75 | 1 | 0,25 | 0,25 | 0,25 | 0,25 | 1 |
| 0,75 | 0,75 | 0,75 | 0,75 | 1 | 0,25 | 0 | 0,25 | 0 | 0 |
| 0,75 | 0,5 | 0,75 | 0,5 | 0,5 | 0 | 1 | 1 | 0 | 1 |
| 0,75 | 0,25 | 0,75 | 0,25 | 0,25 | 0 | 0,75 | 0,75 | 0 | 1 |
| 0,75 | 0 | 0,75 | 0 | 0 | 0 | 0,5 | 0,5 | 0 | 1 |
| 0,5 | 1 | 1 | 0,5 | 1 | 0 | 0,25 | 0,25 | 0 | 1 |
| 0,5 | 0,75 | 0,75 | 0,5 | 1 | 0 | 0 | 0 | 0 | 1 |
| 0,5 | 0,5 | 0,5 | 0,5 | 1 | | | | | |

# Fig. 11A

| | | |
|---|---|---|
| 0 | 0+0+0 | |
| 1 | 0+0+0,25 | |
| 2 | 0+0+0,5 | |
| 3 | 0+0+0,75 | |
| 4 | 0+0+1 | |
| 5 | 0+,25+0 | |
| 6 | 0+,25+0,25 | |
| 7 | 0+,25+0,5 | |
| 8 | 0+,25+0.75 | |
| 9 | 0+,25+1 | |
| 10 | 0+0,5+0 | |
| 11 | 0+0,5+0,25 | |
| 12 | 0+0,5+0,5 | |
| 13 | 0+0,5+0,75 | |
| 14 | 0+0,5+1 | |
| 15 | 0+0,75+0 | |
| 16 | 0+0,75+0,25 | |
| 17 | 0+0,75+0,5 | |
| 18 | 0+0,75+0,75 | |
| 19 | 0+0,75+1 | |
| 20 | 0+1+0 | |
| 21 | 0+1+0,25 | |
| 22 | 0+1+0,5 | |
| 23 | 0+1+0,75 | |
| 24 | 0+1+1 | |
| 25 | 0,25+0+0 | |
| 26 | 0,25+0+0,25 | |
| 27 | 0,25+0+0,5 | |
| 28 | 0,25+0+0,75 | |
| 29 | 0,25+0+1 | |
| 30 | 0,25+0,25+0 | |
| 31 | 0,25+0,25+0,25 | |
| 32 | 0,25+0,25+0,5 | |
| 33 | 0,25+0,25+0,75 | |
| 34 | 0,25+0,25+1 | |
| 35 | 0,25+0,5+0 | |
| 36 | 0,25+0,5+0,25 | |
| 37 | 0,25+0,5+0,5 | |
| 38 | 0,25+0,5+0,75 | |
| 39 | 0,25+0,5+1 | |
| 40 | 0,25+0,75+0 | |
| 41 | 0,25+0,75+0,25 | |
| 42 | 0,25+0,75+0,5 | |
| 43 | 0,25+0,75+0,75 | |
| 44 | 0,25+0,75+1 | |
| 45 | 0,25+1+0 | |
| 46 | 0,25+1+0,25 | |
| 47 | 0,25+1+0,5 | |
| 48 | 0,25+1+0,75 | |
| 49 | 0,25+1+1 | |
| 50 | 0,5+0+0 | |
| 51 | 0,5+0+0,25 | |
| 52 | 0,5+0+0,5 | |
| 53 | 0,5+0+0,75 | |
| 54 | 0,5+0+1 | |
| 55 | 0,5+0,25+0 | |
| 56 | 0,5+0,25+0,25 | |
| 57 | 0,5+0,25+0,5 | |
| 58 | 0,5+0,25+0,75 | |
| 59 | 0,5+0,25+1 | |
| 60 | 0,5+0,5+0 | |
| 61 | 0,5+0,5+0,25 | |
| 62 | 0,5+0,5+0,5 | |
| 63 | 0,5+0,5+0,75 | |
| 64 | 0,5+0,5+1 | |
| 65 | 0,5+0,75+0 | |
| 66 | 0,5+0,75+0,25 | |
| 67 | 0,5+0,75+0,5 | |
| 68 | 0,5+0,75+0,75 | |
| 69 | 0,5+0,75+1 | |
| 70 | 0,5+1+0 | |
| 71 | 0,5+1+0,25 | |
| 72 | 0,5+1+0,5 | |
| 73 | 0,5+1+0,75 | |
| 74 | 0,5+1+1 | |

Fig. 11B

Fig. 12

EP 2 254 075 A2

Fig. 13

Fig. 14

33

Fig. 15

Fig. 16

## Fig. 17

Klassifikationsmöglichkeiten